(19) Europäisches Patentamt
European Patent Office
Office européen des brevets

(11) **EP 3 576 234 B1**

(12) **FASCICULE DE BREVET EUROPEEN**

(45) Date de publication et mention de la délivrance du brevet:
**19.01.2022 Bulletin 2022/03**

(21) Numéro de dépôt: **19177356.3**

(22) Date de dépôt: **29.05.2019**

(51) Classification Internationale des Brevets (IPC):
**H02B 1/56** *(2006.01)*      **H02B 3/00** *(2006.01)*
**G06F 30/18** *(2020.01)*

(52) Classification Coopérative des Brevets (CPC):
**H02B 3/00; G06F 30/18; H02B 1/565;**
G06F 2113/16

(54) **PROCÉDÉ DE DÉTERMINATION D'UNE SOLUTION DE REFROIDISSEMENT POUR UNE ARMOIRE ÉLECTRIQUE, PRODUIT PROGRAMME D'ORDINATEUR ET SYSTÈME DE TRAITEMENT DE DONNÉES ASSOCIÉS**

VERFAHREN ZUR ERMITTLUNG EINER KÜHLLÖSUNG FÜR EINEN SCHALTSCHRANK, ENTSPRECHENDES COMPUTERPROGRAMMPRODUKT UND DATENVERARBEITUNGSSYSTEM

METHOD FOR DETERMINING A COOLING SOLUTION FOR AN ELECTRICAL CABINET, ASSOCIATED COMPUTER PROGRAM PRODUCT AND DATA PROCESSING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.05.2018 FR 1854629**

(43) Date de publication de la demande:
**04.12.2019 Bulletin 2019/49**

(73) Titulaire: **Schneider Electric Industries SAS**
**92500 Rueil Malmaison (FR)**

(72) Inventeurs:
• **PERRIN, Alain**
**38050 GRENOBLE Cedex 09 (FR)**
• **AGNAOU, Abderrahmane**
**38050 GRENOBLE Cedex 09 (FR)**

(74) Mandataire: **Lavoix**
**2, place d'Estienne d'Orves**
**75441 Paris Cedex 09 (FR)**

(56) Documents cités:
**EP-A1- 2 779 335      EP-A1- 3 016 221**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne les armoires électriques du type dans lesquelles sont logées une pluralité d'unités fonctionnelles électriques, lesdites unités fonctionnelles électriques étant agencées suivant un plan de séparation de l'armoire électrique délimitant :

-   une première zone thermique formée par un premier espace de l'armoire électrique situé d'un premier côté du plan de séparation, et
-   une seconde zone thermique formée par un deuxième espace de l'armoire électrique d'un deuxième côté du plan de séparation.

Des armoires électriques de ce type sont connues et sont décrites par exemple dans WO-A-2013/083421, EP-A-2 779 334, EP-A-2 779 335 et EP-A1-3 016 221. En séparant l'intérieur du ou de chaque module de l'armoire électrique entre deux zones, les unités fonctionnelles étant disposées à l'interface entre ces zones, il est possible de tenir compte de la spécificité thermique de chaque appareil électrique monté sur une unité fonctionnelle et d'optimiser ainsi le fonctionnement de l'armoire en plaçant chaque appareil électrique dans une zone thermique où la température est la plus proche de la température à laquelle le rendement de l'appareil électrique est optimal.

Toutefois, il est généralement nécessaire de refroidir l'armoire électrique afin de maintenir les températures dans les première et deuxième zones thermiques du ou de chaque module au plus près des températures auxquelles les rendements des appareils électriques de l'armoire sont optimaux. Or, il est difficile d'appréhender a priori les besoins frigorifiques de l'armoire pour maintenir les températures dans les zones thermiques à des niveaux acceptables. Il est également difficile d'évaluer quelle architecture de l'armoire permet de minimiser les besoins frigorifiques de l'armoire. Cela conduit le plus souvent à surdimensionner les unités frigorifiques refroidissant l'armoire, au détriment de la consommation électrique de l'armoire.

Un objectif de l'invention est de permettre de déterminer facilement une solution de refroidissement d'armoire électrique qui soit optimisée vis-à-vis des spécificités de l'armoire électrique. Un autre objectif est que la solution de refroidissement ainsi déterminée minimise la consommation électrique de l'armoire.

A cet effet, l'invention a pour objet un procédé de détermination selon la revendication 1.

Selon des modes de réalisation particuliers de l'invention, le procédé de détermination présente également l'une ou plusieurs des caractéristiques des revendications 2 à 12, prise(s) isolément ou suivant toute(s) combinaison(s) techniquement possible(s).

L'invention a également pour objet un système selon la revendication 13.

L'invention a encore pour objet un produit programme d'ordinateur selon la revendication 14.

L'invention a enfin pour objet un support physique d'enregistrement selon la revendication 15.

D'autres caractéristiques et avantages de l'invention apparaîtront à la lecture de la description qui va suivre, donnée uniquement à titre d'exemple et faite en se référant aux dessins annexés, dans lesquels :

-   la Figure 1 est une vue en perspective d'une armoire électrique, selon une première variante,
-   la Figure 2 est une vue en perspective d'une unité fonctionnelle de l'armoire électrique de la Figure 1,
-   les Figures 3 à 14 sont des vues en coupe de l'armoire électrique de la Figure 1, selon différentes variantes,
-   la Figure 15 est un schéma d'un dispositif de détermination selon l'invention,
-   la Figure 16 est un diagramme en blocs illustrant un procédé de détermination mis en oeuvre par le dispositif de détermination de la Figure 15,
-   la Figure 17 est un diagramme en blocs illustrant une première étape du procédé de la Figure 16,
-   la Figure 18 est un diagramme en blocs illustrant une deuxième étape du procédé de la Figure 16,
-   la Figure 19 est un diagramme en blocs illustrant une troisième étape du procédé de la Figure 16, et
-   la Figure 20 est un diagramme en blocs illustrant une quatrième étape du procédé de la Figure 16.

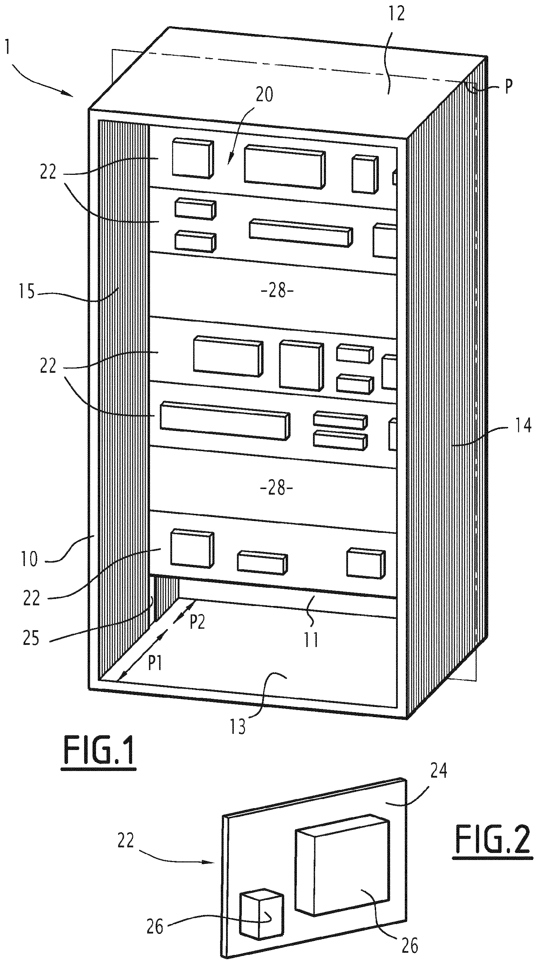

L'armoire électrique 1 représentée sur la Figure 1 a une forme sensiblement parallélépipédique. Elle comporte une paroi avant 10, une paroi arrière 11, une paroi supérieure 12, une paroi inférieure 13 et deux parois latérales 14, 15.

La paroi avant 10 de l'armoire électrique 1 comporte par exemple une porte d'accès à l'intérieur de l'armoire 1. Cette porte n'est pas représentée sur la Figure 1, laissant ainsi visible l'intérieur de l'armoire 1.

Cette armoire électrique 1 est de préférence étanche, par exemple conforme à la norme IEC 60529 avec un indice IP55.

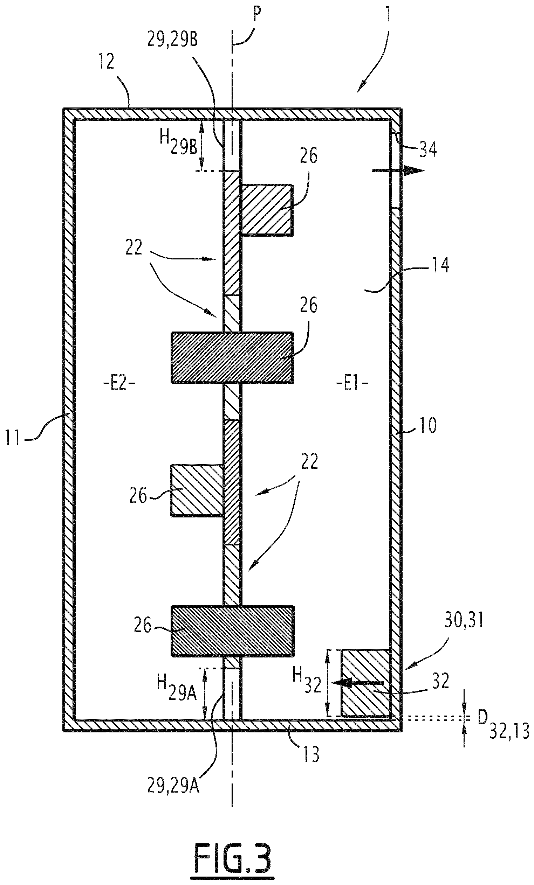

L'armoire électrique 1 comporte une cloison de séparation 20 agencée suivant un plan de séparation P délimitant un premier espace E1 (Figure 3) situé vers la partie avant de l'armoire électrique 1 et un deuxième espace E2 (Figure 3) situé vers la partie arrière de l'armoire électrique 1. Le plan de séparation P est de préférence sensiblement parallèle aux parois avant 10 et arrière 11 de l'armoire électrique 1.

Le premier espace E1 présente une première profondeur P1 (Figure 1), mesurée entre la paroi avant 10 et la cloison de séparation 20. Le deuxième espace E2 présente une deuxième profondeur P2 (Figure 1), mesurée entre la paroi arrière 11 et la cloison de séparation 20.

La cloison de séparation 20 comprend plusieurs unités fonctionnelles 22 amovibles.

En référence à la Figure 2, chaque unité fonctionnelle 22 comporte un support 24 adapté pour se fixer sur des moyens de fixation de l'armoire électrique 1, constitués par exemple de deux montants 25 (Figure 1) verticaux parallèles de l'armoire électrique 1 positionnés dans le plan de séparation P. Chaque unité fonctionnelle 22 comporte également au moins un appareil 26, porté par une face du support 24. On notera qu'une même unité fonctionnelle 22 peut porter un appareil 26 sur chacune de ses deux faces.

Les unités fonctionnelles 22 sont ici constituées par des unités fonctionnelles électriques, c'est-à-dire des unités fonctionnelles 22 dans lesquelles le ou chaque appareil 26 est un appareil électrique, tel que par exemple un disjoncteur, un contacteur électromécanique, un départ-moteur, un variateur de vitesse, un démarreur, un filtre ou une résistance de freinage, des composants d'automatismes tels que des automates, des modules d'entrées sorties et/ou des îlots de communication.

Pour chaque unité fonctionnelle 22, son support 24 présente deux faces parallèles au plan de séparation P, une face avant située du côté du premier espace E1 et une face arrière située du côté du second espace E2.

En référence à la Figure 3, certains appareils électriques 26 sont entièrement situés dans le premier espace E1, c'est-à-dire fixés sur la face avant du support 24 de l'unité fonctionnelle électrique 22. Ces appareils électriques 26 présents dans le premier espace E1 sont de préférence des appareils électriques dégagent peu de calories, comme par exemple des appareils de contrôle-commande tels que des disjoncteurs ou des contacteurs électromécaniques, automates...

Certains appareils électriques 26 sont situés uniquement dans le deuxième espace E2, c'est-à-dire fixes sur la face arrière du support 24 de l'unité fonctionnelle électrique 22. Ces appareils électriques 26 présents uniquement dans le deuxième espace E2 sont de préférence des appareils électriques dégageant beaucoup de calories, comme par exemple des inductances de lissage ou des résistances de freinage, des transformateurs, ou des systèmes de distribution électrique de puissance.

Certains appareils électriques 26 traversent leur support 24 de manière à présenter une première partie située dans le premier espace E1 et une deuxième partie située dans le deuxième espace E2. Ces appareils électriques situés en partie dans le premier espace et dans le deuxième espace E2 sont par exemple des appareils dissipateurs de puissance du type variateur de vitesse, démarreur progressif, alimentation, contrôleur de mouvement, onduleur, etc. La partie contrôle de ces appareils est alors située à l'avant et la partie puissance dotée des transistors de puissance est située à l'arrière.

Du fait de la présence de la paroi de séparation 20, le volume intérieur de l'armoire électrique 1 est ainsi divisé en deux zones thermiques distinctes :

- une première zone thermique froide formée par le premier espace E1 car elle reçoit des appareils électriques 26 ou parties d'appareils 26 qui ne chauffent pas ou très peu ; en outre, ces appareils sont généralement sensibles à la chaleur et tendent à fonctionner de façon optimale quand la température est limitée ; et
- une seconde zone thermique chaude formée par le deuxième espace E2 car elle reçoit des appareils électriques 26 ou parties d'appareils 26 qui chauffent ; en outre, ces appareils sont généralement peu sensibles à la chaleur et tendent à fonctionner de façon optimale même si la température est plus élevée.

De retour à la Figure 1, les unités fonctionnelles 22 sont positionnées de manière adjacente suivant le plan de séparation P de manière à combler la majeure partie du plan de séparation P pour former la cloison de séparation 20. Dans les cas où le nombre d'unités fonctionnelles 22 ne suffit pas à former toute la cloison de séparation 20, des caches 28 sont généralement positionnés suivant le plan de séparation P, de manière adjacente aux unités fonctionnelles 22. Ces caches 28 sont alors formés par les seuls supports 24 des unités fonctionnelles 22, et ne comportent pas d'appareil 26.

Dans les variantes des Figures 3 à 5 et 7 à 14, la cloison de séparation 20 ne comble pas intégralement le plan de séparation P, de sorte qu'une ouverture de circulation d'air 29 est laissée libre dans la moitié supérieure et/ou la moitié inférieure du plan de séparation P, de façon à faciliter la circulation d'air entre les premier et deuxième espaces E1, E2 du module 16, 17, 18. Ladite ouverture de circulation d'air 29 s'étend de préférence sur toute la largeur du plan de séparation P.

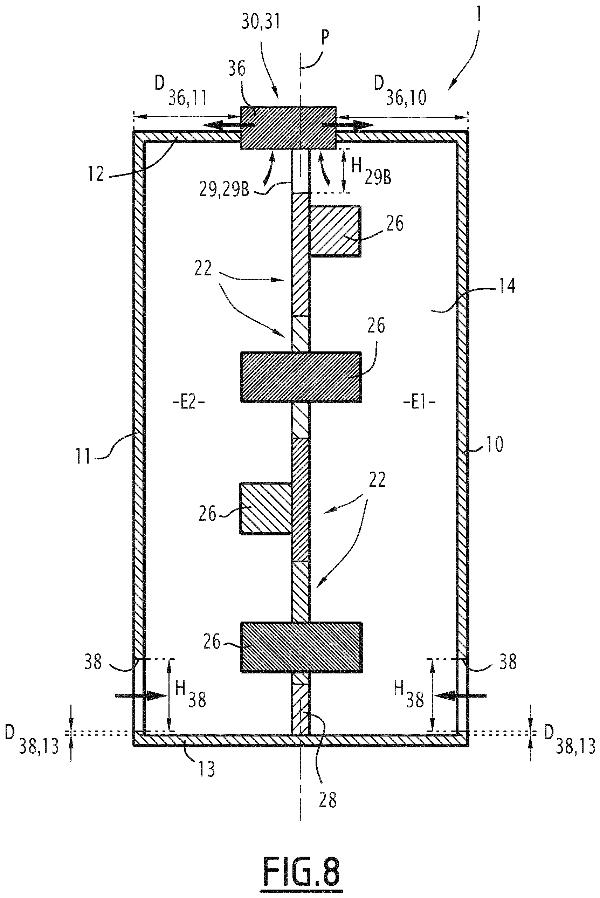

Dans les variantes des Figures 3 à 5, 7 et 9 à 14, une telle ouverture de circulation d'air 29 est laissée libre à la fois dans la moitié inférieure et dans la moitié supérieure du plan de séparation P ; elle est notée 29A pour l'ouverture de circulation d'air inférieure et 29B pour l'ouverture de circulation d'air supérieure. Dans la variante de la Figure 8, une ouverture de circulation d'air 29 est laissée libre uniquement dans la moitié supérieure du plan de séparation P ; elle est notée 29B.

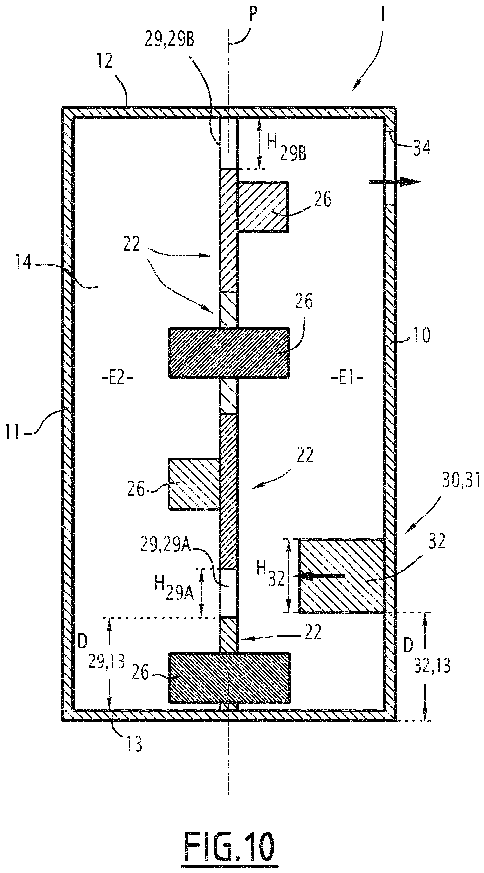

L'ouverture de circulation d'air inférieure 29A est, dans les variantes des Figures 3 à 5, 7 et 9, en extrémité de cloison, c'est-à-dire entre l'espace du plan de séparation P occupé par les unités fonctionnelle 22 et la paroi inférieure 13. Dans les variantes des Figures 10 à 14, l'ouverture de circulation d'air inférieure 29A est en milieu de cloison, c'est-à-dire qu'elle est interposée entre deux des unités fonctionnelles 22.

L'ouverture de circulation d'air inférieure 29A est à une distance $D_{29,13}$ (Figure 10) de la paroi inférieure 13 et présente une hauteur $H_{29A}$. Dans les variantes des Figures 3 à 5, 7 et 9, la distance $D_{29,13}$ est nulle.

L'ouverture de circulation d'air supérieure 29B est, dans chaque variante, en extrémité de cloison, c'est-à-dire entre l'espace du plan de séparation P occupé par les unités fonctionnelle 22 et la paroi supérieure 12.

L'ouverture de circulation d'air inférieure 29B présente une hauteur $H_{29B}$.

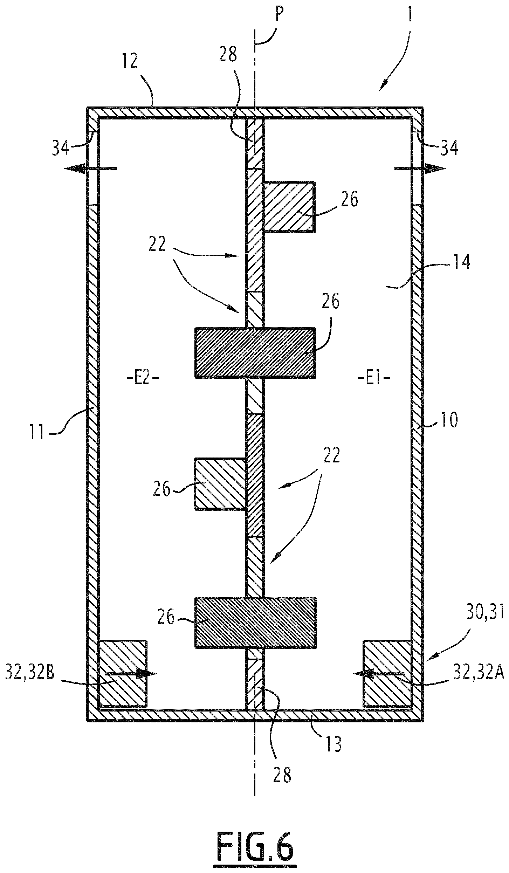

Dans la variante de la Figure 6, la cloison de séparation 20 comble sensiblement intégralement le plan de séparation P. Par « comble sensiblement intégralement le plan de séparation P », on comprend que les éventuels interstices laissés libres dans le plan de séparation P occupent au total une surface inférieure à 1,5% de la surface du plan de séparation P, lesdits interstices comprenant par exemple un interstice périphérique à la cloison de séparation 20, ou des interstices internes à la cloison de séparation 20 résultant de défauts présents dans cette cloison de séparation 20.

De retour à la Figure 3, l'armoire électrique 1 comporte également, de préférence, un système 30 de refroidissement et de régulation de la température des premier et second espaces E1, E2. Ce dispositif de refroidissement 30 est destiné :

- ∘ d'une part à fixer et à réguler une première température moyenne de fonctionnement $T1_{moy}$ dans le premier espace E1 ; et
- ∘ d'autre part à fixer et à réguler une seconde température moyenne de fonctionnement $T2_{moy}$ dans le second espace E2, la seconde température moyenne de fonctionnement $T2_{moy}$ étant supérieure à la première température moyenne de fonctionnement $T1_{moy}$.

Ce système de refroidissement 30 est, dans les variantes des Figures 3 à 8 et 10 à 12, constitué par un système de ventilation 31 comprenant :

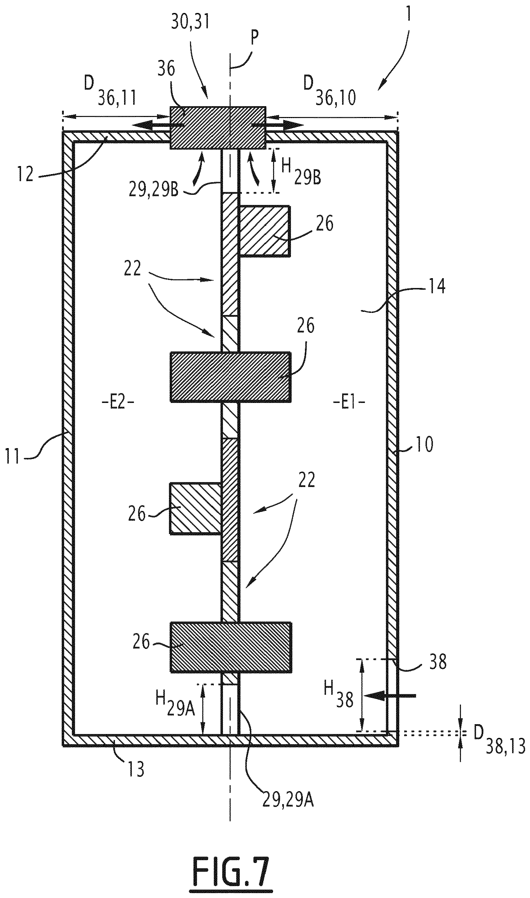

- au moins un ventilateur de surpression 32 et au moins une ouverture d'évacuation d'air 34, comme dans les variantes des Figures 3 à 6 et 10 à 12, ou
- au moins un ventilateur d'extraction 36 et au moins une ouverture d'aspiration d'air 38, comme dans les variantes des Figures 7, 8 et 13.

Chaque ventilateur de surpression 32 est configuré pour mettre l'intérieur de l'armoire électrique 1 en surpression. A cet effet, chaque ventilateur de surpression 32 est monté sur l'armoire électrique 1 de sorte à aspirer de l'air à l'extérieur de l'armoire électrique 1 et refouler cet air aspiré vers l'intérieur de l'armoire 1.

Chaque ventilateur de surpression 32 est ici constitué par un ventilateur axial, c'est-à-dire un ventilateur aspirant un flux d'air suivant un axe et dirigeant le flux d'air refoulé suivant ce même axe.

Chaque ventilateur de surpression 32 est en particulier rapporté sur la paroi avant 10 ou arrière 11 de l'armoire électrique, dans une partie inférieure de cette paroi 10, 11. Dans les variantes des Figures 3 à 5 et 10 à 12, chaque ventilateur de surpression 32 est rapporté exclusivement sur la paroi avant 10. Dans la variante de la Figure 6, au moins un ventilateur de surpression primaire 32A est rapporté sur la paroi avant 10 et au moins un ventilateur de surpression secondaire 32B est rapporté sur la paroi arrière 11.

Chaque ventilateur de surpression 32 est à une distance $D_{32,13}$ de la paroi inférieure 13 et présente une hauteur $H_{32}$, la distance $D_{32,13}$ étant mesurée depuis le bord inférieur du ventilateur 32 jusqu'à la face supérieure de la paroi 13.

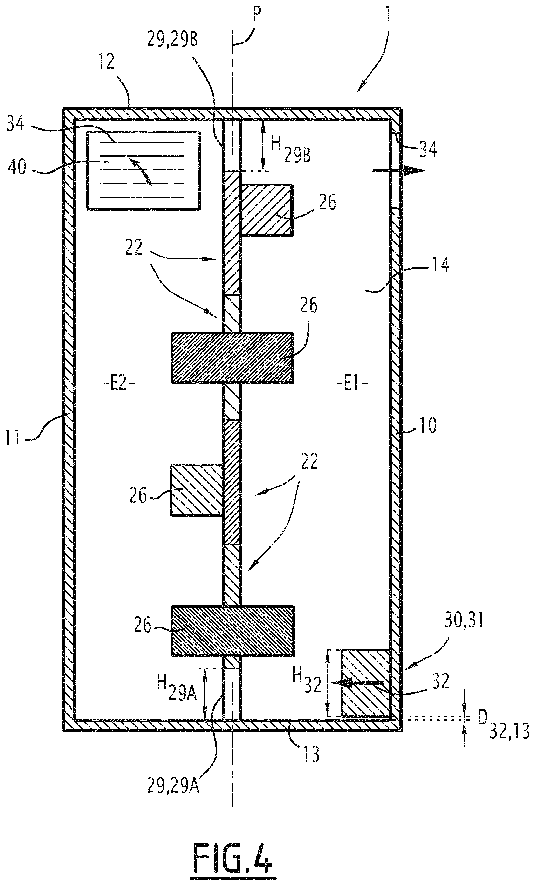

Chaque ouverture d'évacuation d'air 34 est ménagée dans la paroi avant 10, arrière 11 ou dans l'une des parois latérales 14, 15 de l'armoire électrique 1, dans une partie supérieure de ladite paroi 10, 11, 14, 15. Elle est de préférence obturée par une grille 40 (Figure 4)

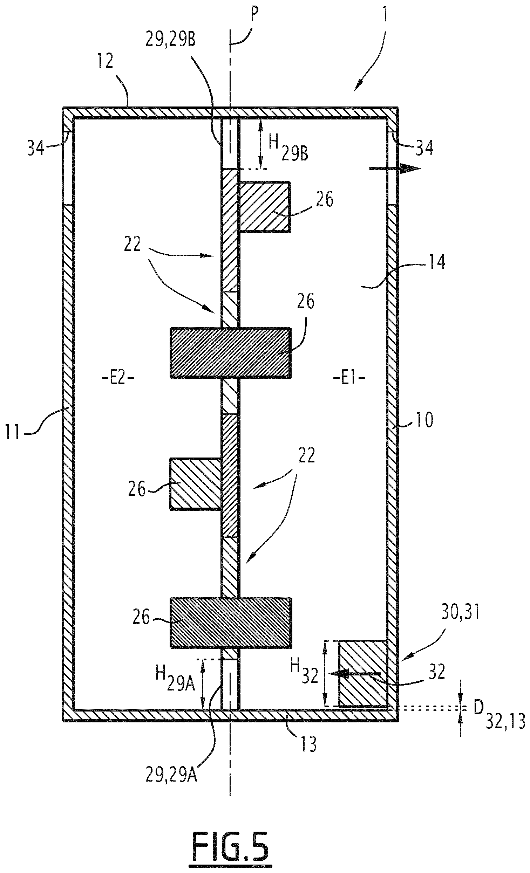

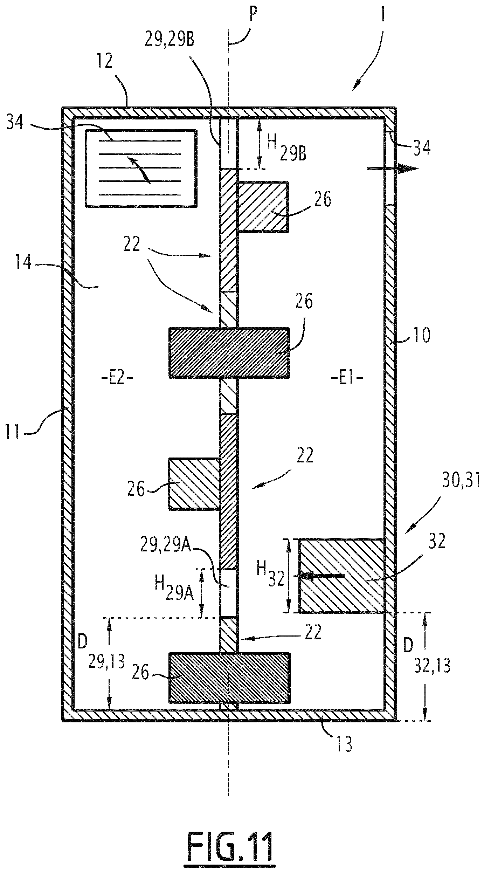

Dans les variantes des Figures 3 et 10, une seule ouverture d'évacuation d'air 34 est formée, ladite ouverture 34 étant ménagée dans la paroi avant 10 de l'armoire 1. Dans les variantes des Figures 4 et 11, deux ouvertures d'évacuation d'air 34 sont formées, l'une étant ménagée dans la paroi avant 10 de l'armoire 1 et l'autre étant ménagée dans une paroi latérale 14, 15 de l'armoire 1 de sorte à déboucher dans le deuxième espace E2. Dans les variantes des Figures 5, 6 et 12, deux ouvertures d'évacuation d'air 34 sont formées, l'une étant ménagée dans la paroi avant 10 de l'armoire 1 et l'autre étant ménagée dans la paroi arrière 11 de l'armoire 1.

Chaque ouverture d'évacuation d'air 34 présente des dimensions et un positionnement classiques.

Chaque ventilateur d'extraction 36 est configuré pour mettre l'intérieur de l'armoire électrique 1 en dépression. A cet effet, chaque ventilateur d'extraction 36 est monté sur l'armoire électrique 1 de sorte à aspirer de l'air à l'intérieur de l'armoire électrique 1 refouler cet air aspiré vers l'extérieur de l'armoire 1.

Chaque ventilateur d'extraction 36 est ici constitué par un ventilateur centrifuge, c'est-à-dire un ventilateur aspirant un flux d'air suivant un axe et dirigeant le flux d'air refoulé suivant une direction orthogonale audit axe.

Chaque ventilateur d'extraction 36 est monté exclusivement sur la paroi supérieure 12 de l'armoire électrique.

Chaque ventilateur d'extraction 36 est à une distance $D_{36,10}$ (Figure 7) de la paroi avant 10 et à une distance $D_{36,11}$ (Figure 7) de la paroi arrière 11, chacune desdites distances $D_{36,10}$, $D_{36,11}$ étant mesurée depuis la face extérieure de la paroi 10, 11 jusqu'au bord du ventilateur 36 le plus proche de ladite paroi 10, 11.

Chaque ouverture d'aspiration d'air 38 est ménagée dans la paroi avant 10 ou arrière 11 de l'armoire électrique 1, dans une partie inférieure de ladite paroi 10, 11. Elle est de préférence obturée par une grille (non représentée).

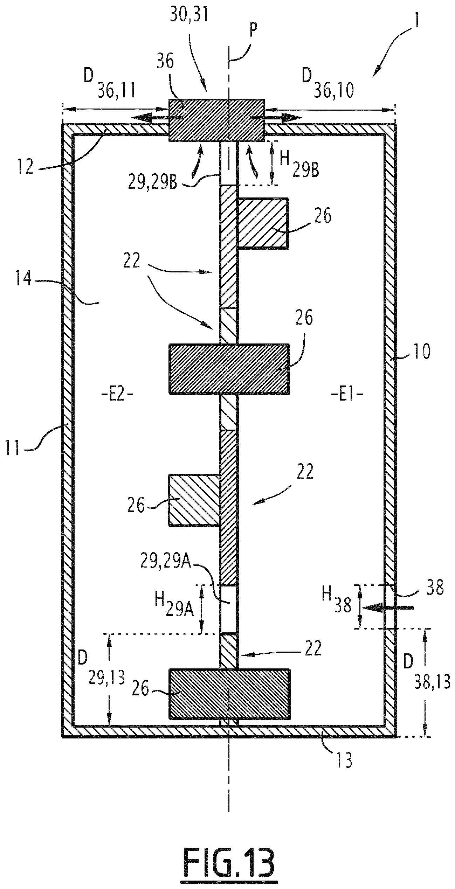

Dans les variantes des Figures 7 et 13, une seule ouverture d'aspiration d'air 38 est formée, ladite ouverture étant ménagée dans la paroi avant 10 de l'armoire 1. Dans la variante de la Figure 8, deux ouvertures d'aspiration d'air 38 sont formées, l'une étant ménagée dans la paroi avant 10 de l'armoire 1 et l'autre étant ménagée dans la paroi arrière 11 de l'armoire 1.

Chaque ouverture d'aspiration d'air 38 est à une distance $D_{38,13}$ de la paroi inférieure 13 et présente une hauteur $H_{38}$, la distance $D_{38,13}$ étant mesurée depuis le bord inférieur de l'ouverture 38 jusqu'à la face supérieure de la paroi 13.

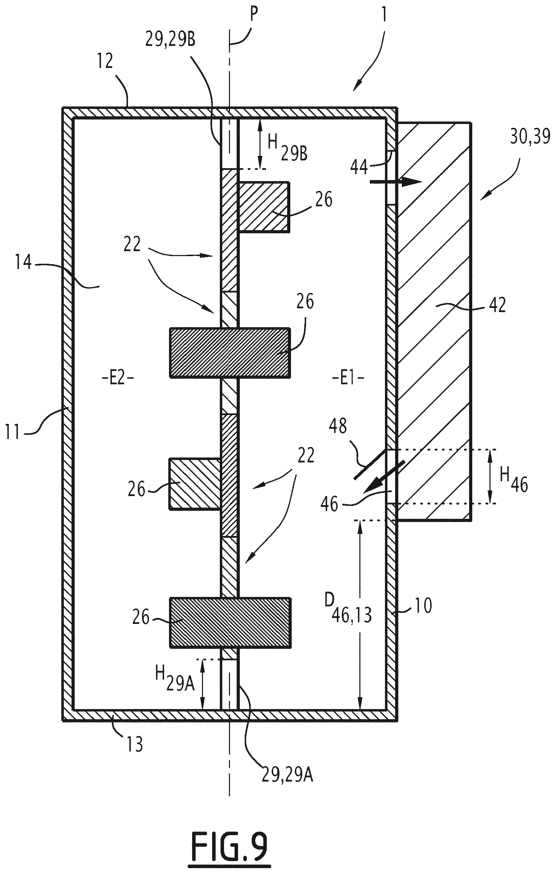

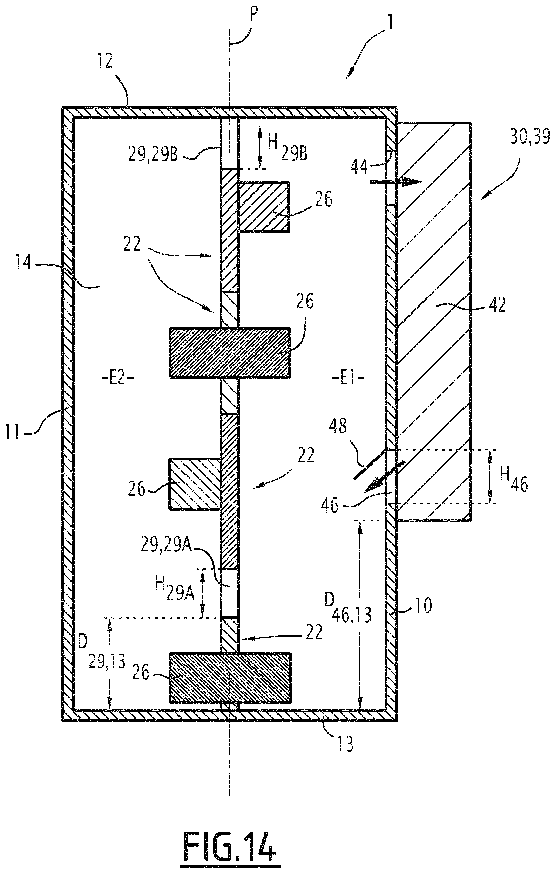

Dans les variantes des Figures 9 et 14, le système de refroidissement 30 est constitué par un système de climatisation 39.

Ce système de climatisation 39 comprend un bloc de climatisation 42 accolé contre la paroi avant 10 de l'armoire 10. Ce bloc de climatisation 42 comporte un premier orifice 44 de prélèvement d'air dans le premier espace E1 de l'armoire électrique 1 et un deuxième orifice 46 d'éjection d'air dans ledit premier espace E1. Le bloc de climatisation est adapté pour refroidir l'air prélevé via l'orifice 44 et le réinjecter dans l'armoire 1 via l'orifice 46.

Chacun des premier et deuxième orifices 44, 46 traverse la paroi avant 10 de l'armoire 1. Le premier orifice 44 est disposé au-dessus du deuxième orifice 46.

Le premier orifice 44 présente des dimensions et un positionnement classiques.

Le deuxième orifice 46 est à une distance $D_{46,13}$ de la paroi inférieure 13 et présente une hauteur $H_{46}$, la distance $D_{46,13}$ étant mesurée depuis le bord inférieur de l'orifice 46 jusqu'à la face supérieure de la paroi 13

Le bloc de climatisation 42 comporte également un déflecteur 48 pour défléchir l'air éjecté via l'orifice 46 vers le bas de l'armoire 1, suivant une direction formant un angle de 45° avec l'horizontale.

En résumé, l'armoire électrique 1 présente les variantes suivantes :

- une première variante, représentée sur la Figure 3, dans laquelle le système de refroidissement 30 est constitué par un système de ventilation 31 comprenant au moins un ventilateur de surpression 32 installé sur la paroi avant 10 et une ouverture d'évacuation d'air 34 ménagée dans la paroi avant 10, la cloison de séparation 20 présentant une ouverture de circulation d'air inférieure 29A en extrémité de cloison et une ouverture de circulation d'air supérieure 29B ;

- une deuxième variante, représentée sur la Figure 4, dans laquelle le système de refroidissement 30 est constitué par un système de ventilation 31 comprenant au moins un ventilateur de surpression 32 installé sur la paroi avant 10, une première ouverture d'évacuation d'air 34 ménagée dans la paroi avant 10 et une deuxième ouverture d'évacuation d'air 34 ménagée dans la paroi latérale 14, la cloison de séparation 20 présentant une ouverture de circulation d'air inférieure 29A en extrémité de cloison et une ouverture de circulation d'air supérieure 29B ;

- une troisième variante, représenté sur la Figure 5, dans laquelle le système de refroidissement 30 est constitué par un système de ventilation 31 comprenant au moins un ventilateur de surpression 32 installé sur la paroi avant 10, une première ouverture d'évacuation d'air 34 ménagée dans la paroi avant 10 et une deuxième ouverture d'évacuation d'air 34 ménagée dans la paroi arrière 11, la cloison de séparation 20 présentant une ouverture de circulation d'air inférieure 29A en extrémité de cloison et une ouverture de circulation d'air supérieure 29B ;

- une quatrième variante, représentée sur la Figure 6, dans laquelle le système de refroidissement 30 est constitué par un système de ventilation 31 comprenant au moins un premier ventilateur de surpression 32A installé sur la paroi avant 10, au moins un deuxième ventilateur de surpression 32B installé sur la paroi arrière 11, une première ouverture d'évacuation d'air 34 ménagée dans la paroi avant 10 et une deuxième ouverture d'évacuation d'air 34 ménagée dans la paroi arrière 11, la cloison de séparation 20 comblant sensiblement intégralement le plan de séparation P ;

- une cinquième variante, représentée sur la Figure 7, dans laquelle le système de refroidissement 30 est constitué par un système de ventilation 31 comprenant un ventilateur d'extraction 36 installé sur la paroi supérieure 12 et une ouverture d'aspiration d'air 38 ménagée dans la paroi avant 10, la cloison de séparation 20 présentant une ouverture de circulation d'air inférieure 29A en extrémité de cloison et une ouverture de circulation d'air supérieure 29B ;

- une sixième variante, représentée sur la Figure 8, dans laquelle le système de refroidissement 30 est constitué par un système de ventilation 31 comprenant un ventilateur d'extraction 36 installé sur la paroi supérieure 12, une première ouverture d'aspiration d'air 38 ménagée dans la paroi avant 10, et une deuxième ouverture d'aspiration d'air 38 ménagée dans la paroi arrière 11, la cloison de séparation 20 présentant une unique ouverture de circulation d'air 29 constituée par une ouverture de circulation d'air supérieure 29B ;

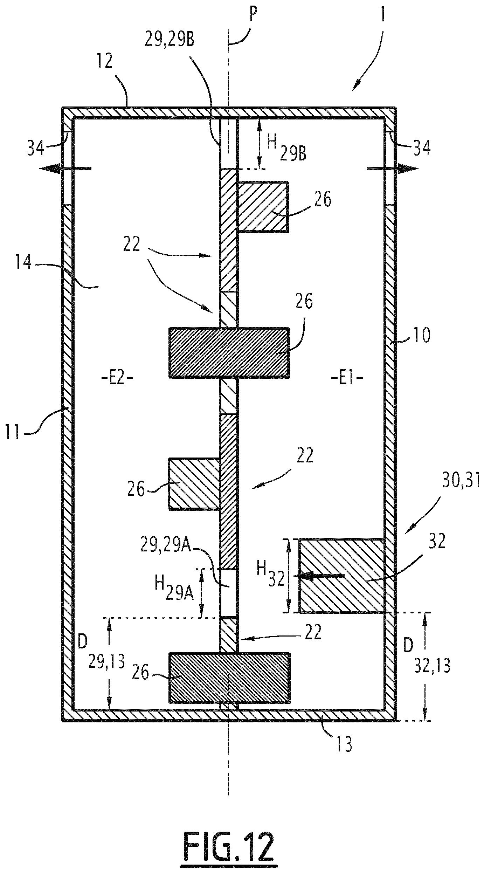

- une septième variante, représentée sur la Figure 9, dans laquelle le système de refroidissement 30 est constitué par un système de climatisation 39 comprenant un bloc de climatisation 42 installé sur la paroi avant 10, la cloison de séparation 20 présentant une ouverture de circulation d'air inférieure 29A en extrémité de cloison et une ouverture de circulation d'air supérieure 29B ;
- une huitième variante, représentée sur la Figure 10, dans laquelle le système de refroidissement 30 est constitué par un système de ventilation 31 comprenant au moins un ventilateur de surpression 32 installé sur la paroi avant 10 et une ouverture d'évacuation d'air 34 ménagée dans la paroi avant 10, la cloison de séparation 20 présentant une ouverture de circulation d'air inférieure 29A en milieu de cloison et une ouverture de circulation d'air supérieure 29B ;
- une neuvième variante, représentée sur la Figure 11, dans laquelle le système de refroidissement 30 est constitué par un système de ventilation 31 comprenant au moins un ventilateur de surpression 32 installé sur la paroi avant 10, une première ouverture d'évacuation d'air 34 ménagée dans la paroi avant 10 et une deuxième ouverture d'évacuation d'air 34 ménagée dans la paroi latérale 14, la cloison de séparation 20 présentant une ouverture de circulation d'air inférieure 29A en milieu de cloison et une ouverture de circulation d'air supérieure 29B ;
- une dixième variante, représentée sur la Figure 12, dans laquelle le système de refroidissement 30 est constitué par un système de ventilation 31 comprenant au moins un ventilateur de surpression 32 installé sur la paroi avant 10, une première ouverture d'évacuation d'air 34 ménagée dans la paroi avant 10 et une deuxième ouverture d'évacuation d'air 34 ménagée dans la paroi arrière 11, la cloison de séparation 20 présentant une ouverture de circulation d'air inférieure 29A en milieu de cloison et une ouverture de circulation d'air supérieure 29B ;
- une onzième variante, représentée sur la Figure 13, dans laquelle le système de refroidissement 30 est constitué par un système de ventilation 31 comprenant un ventilateur d'extraction 36 installé sur la paroi supérieure 12 et une ouverture d'aspiration d'air 38 ménagée dans la paroi avant 10, la cloison de séparation 20 présentant une ouverture de circulation d'air inférieure 29A en milieu de cloison et une ouverture de circulation d'air supérieure 29B ;
- une douzième variante, représentée sur la Figure 14, dans laquelle le système de refroidissement 30 est constitué par un système de climatisation 39 comprenant un bloc de climatisation 42 installé sur la paroi avant 10, la cloison de séparation 20 présentant une ouverture de circulation d'air inférieure 29A en milieu de cloison et une ouverture de circulation d'air supérieure 29B.

Ces différentes variantes ont une influence sur la quantité d'énergie nécessaire au fonctionnement du système de refroidissement 30 pour fixer et réguler les première et deuxième températures moyennes de fonctionnement $T1_{moy}$, $T2_{moy}$. De façon à pouvoir optimiser l'énergie électrique consommée par l'armoire électrique 1, il est donc nécessaire de choisir la variante la plus adaptée en fonction du besoin de refroidissement de l'armoire électrique 1 et du contexte d'utilisation de cette dernière.

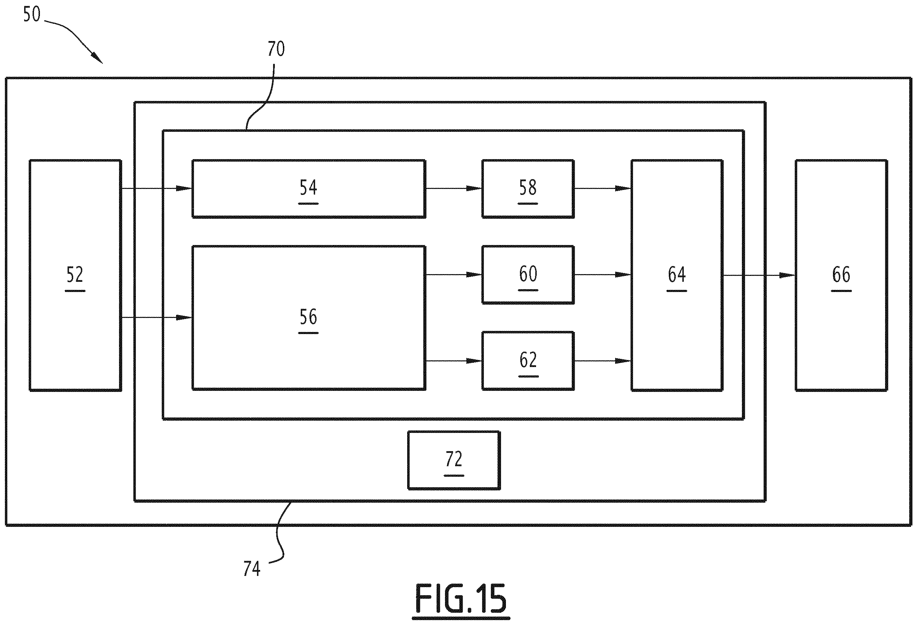

Un dispositif 50 de détermination d'une solution de refroidissement pour l'armoire électrique 1 va maintenant être décrit, en référence à la Figure 15. Ce dispositif de détermination 50 est destiné à sélectionner une solution de refroidissement de l'armoire électrique 1 parmi les différentes variantes présentées ci-dessus, et à en préciser les paramètres, en particulier s'agissant des dimensions et du positionnement des ouvertures de circulation d'air 29 et, le cas échéant, du positionnement du ventilateur d'extraction 36.

Ce dispositif de sélection 50 comprend un organe 52 d'entrée de données, un organe 54 de caractérisation d'un besoin de refroidissement de l'armoire électrique 1, un organe 56 de déduction d'un coefficient de répartition du besoin de refroidissement entre les premier et deuxième espaces E1, E2, un organe 58 de sélection d'un système de refroidissement de l'armoire électrique 1, un organe 60 de choix d'un agencement du système de refroidissement, un organe 62 d'évaluation de la nécessité de former dans le plan de séparation P au moins une ouverture de circulation d'air 29 et, le cas échéant, de la position et des dimensions de cette ouverture de circulation d'air 29, un organe de synthèse 64 pour synthétiser la solution de refroidissement déterminée en fonction du système de refroidissement 30 sélectionné, de l'agencement choisi et des éventuelles ouverture de circulation d'air 29 formées dans le plan de séparation P, et un organe 66 de présentation de la ou chaque solution de refroidissement déterminée.

L'organe d'entrée 52 est adapté pour l'entrée de données relatives à l'armoire électrique 1 et de critères d'accessibilité de l'armoire électrique 1 dans une mémoire temporaire (non représentée) du dispositif de détermination 50.

De préférence, les données relatives à l'armoire électrique 1 comprennent notamment une première température de consigne pour le premier espace E1 de l'armoire électrique 1 et/ou une deuxième température de consigne pour le deuxième espace E2 de l'armoire électrique 1. En sus, les données relatives à l'armoire électrique 1 comprennent par exemple les dimensions extérieures de l'armoire électrique 1, la profondeur de localisation du plan de séparation P, une désignation des unités fonctionnelles électriques 22 installées dans l'armoire électrique 1 et de leurs caractéristiques, un taux d'utilisation de chacune de ces unités fonctionnelles électriques 22, une altitude d'installation de l'armoire électrique 1, la nature du matériau composant les parois 10, 11, 12, 13, 14, 15 de l'armoire électrique 1, une tension d'alimentation du système de refroidissement 30, et/ou des paramètres environnementaux de l'armoire électrique 1, dont une température à l'extérieur de l'armoire électrique 1,

Les critères d'accessibilité de l'armoire électrique 1 comprennent par exemple, pour chacune des parois 10, 11, 12, 14, 15 de l'armoire électrique 1 une désignation du caractère accessible ou inaccessible de la paroi 10, 11, 12, 14, 15, la paroi étant désignée comme accessible si elle est laissée libre et comme inaccessible si elle est accolée contre un élément extérieur à l'armoire électrique 1 comme un sol, un mur, un plafond, ou une autre armoire électrique.

L'organe d'entrée 52 est typiquement adapté pour la saisie desdites données par un opérateur utilisant le dispositif de sélection 50. A cet effet, l'organe d'entrée 52 comprend de préférence un périphérique d'interface utilisateur, par exemple un clavier.

Dans l'exemple de réalisation de l'invention, l'organe de caractérisation 54, l'organe de déduction 56, l'organe de sélection 58, l'organe de choix 60, l'organe d'évaluation 62 et l'organe de synthèse 64 sont réalisés sous forme de logiciels stockés dans une mémoire 70 et aptes à être exécutés par un processeur 72, associé à la mémoire 70, le processeur 72 et la mémoire 70 formant une unité de traitement d'informations 74 incluse dans le dispositif de sélection 50. En variante, l'organe de caractérisation 54, l'organe de déduction 56, l'organe de sélection 58, l'organe de choix 60, l'organe d'évaluation 62 et l'organe de synthèse 64 sont réalisés au moins partiellement sous forme de composants logiques programmables, ou encore sous forme de circuits intégrés dédiés, inclus dans le dispositif de sélection 50.

L'organe de caractérisation 54 est programmé pour caractériser le besoin de refroidissement de l'armoire électrique 1 à partir des données relatives à l'armoire électrique 1 et des critères d'accessibilité de cette armoire 1.

A cet effet, l'organe de caractérisation 54 est programmé pour :

- déduire du matériau des parois 10, 11, 12, 13, 14, 15 un coefficient de transfert thermique desdites parois 10, 11, 12, 13, 14, 15,
- déduire des critères d'accessibilité de l'armoire électrique 1 et des dimensions extérieures de l'armoire 1 une surface d'échange thermique,
- déduire de la désignation des unités fonctionnelles électriques 22 installées dans l'armoire électrique 1 et de leur taux de charge une puissance totale de dissipation thermique à l'intérieur de l'armoire, et
- calculer une température interne de l'armoire 1 en fonction de la température à l'extérieur de l'armoire 1, de la puissance thermique dissipée totale, du coefficient de transfert thermique et de la surface d'échange thermique.

Plus particulièrement, l'organe de caractérisation 54 est programmé pour déduire la surface d'échange thermique comme étant égale à la somme des surfaces des parois 10, 11, 12, 14, 15 accessibles, la surface de chacune de ces parois 10, 11, 12, 14, 15 accessibles étant déterminée à partir des dimensions extérieures de l'armoire 1, et pour calculer la température interne de l'armoire 1 au moyen de la formule suivante :

$$T_{int} = T_{ext} + \frac{P_{Tot}}{K \times S_u},$$

où :

$T_{int}$ est la température interne de l'armoire 1,
$T_{ext}$ est la température à l'extérieur de l'armoire 1,
$P_{Tot}$ est la puissance thermique dissipée totale,
K est coefficient de transfert thermique, et
$S_u$ est la surface d'échange thermique.

L'organe de caractérisation 54 est programmé pour comparer la température interne ainsi calculée à un seuil de température dépendant de la première température de consigne, et pour :

- caractériser le besoin frigorifique comme étant nul lorsque la température interne ainsi calculée est inférieure à ce seuil, et
- calculer le besoin frigorifique en fonction de la température à l'extérieur de l'armoire 1, de la puissance thermique dissipée totale, du coefficient de transfert thermique, de la surface d'échange thermique et de la première température de consigne lorsque la température interne ainsi calculée est supérieure audit seuil.

Ce seuil est par exemple égal à $T_1 + t$, où $T_1$ est la première température de consigne et t est un paramètre dépendant de la puissance thermique dissipée dans les unités fonctionnelles électriques 22 dans le premier espace E1 de l'armoire électrique 1 et de la puissance thermique dissipée dans les unités fonctionnelles électriques 22 dans le deuxième espace E2 de l'armoire électrique 1.

L'organe de caractérisation 54 est typiquement programmé pour calculer le besoin frigorifique au moyen de la formule suivante :

$$P_{frigo} = P_{Tot} - [K \times S_u \times ((a \times T_1 + b) - T_{ext})],$$

où :

$P_{frigo}$ est le besoin frigorifique, exprimé en termes de puissance frigorifique,
$P_{Tot}$ est la puissance thermique dissipée totale,
$K$ est coefficient de transfert thermique,
$S_u$ est la surface d'échange thermique,
$T_1$ est la première température de consigne,
$T_{ext}$ est la température à l'extérieur de l'armoire 1, et
a et b sont des coefficients dépendant chacun de la puissance thermique dissipée dans les unités fonctionnelles électriques 22 dans le premier espace E1 de l'armoire électrique 1 et de la puissance thermique dissipée dans les unités fonctionnelles électriques 22 dans le deuxième espace E2 de l'armoire électrique 1, et des critères d'accessibilité de l'armoire 1.

L'organe de déduction 56 est programmé pour déduire le coefficient de répartition du besoin de refroidissement en fonction des données relatives à l'armoire électrique.

A cet effet, l'organe de déduction 56 est programmé pour :

- déduire des critères d'accessibilité de l'armoire électrique 1 et des dimensions extérieures de l'armoire 1 une surface d'échange thermique du deuxième espace E2 avec l'extérieur,
- déduire de la désignation des unités fonctionnelles électriques 22 installées dans l'armoire électrique 1 et de leur taux de charge une puissance thermique dissipée à l'intérieur du deuxième espace E2,
- calculer un besoin frigorifique du deuxième espace E2 en fonction de la température à l'extérieur de l'armoire 1, de la puissance thermique dissipée à l'intérieur du deuxième espace E2, du coefficient de transfert thermique, de la surface d'échange thermique du deuxième espace E2 et de la deuxième température de consigne, et
- calculer le coefficient de répartition en fonction du besoin frigorifique du deuxième espace E2 et du besoin frigorifique total de l'armoire 1.

En particulier, l'organe de déduction 56 est programmé pour déduire la surface d'échange thermique du deuxième espace E2 avec l'extérieur comme étant égale à la somme de la surface de la paroi arrière 11, lorsqu'elle est accessible, avec la surface de la portion arrière de chacune des parois supérieure 12 et latérales 14, 15 accessibles, ladite portion arrière étant constituée par la portion de la paroi 12, 14, 15 s'étendant entre le plan P et la paroi arrière 11.

L'organe de déduction 56 est par ailleurs programmé pour calculer le besoin frigorifique du deuxième espace E2 au moyen de la formule suivante :

$$P_{f2} = P_{e2} - [K \times S_{u2} \times ((a \times T_2 + b) - T_{ext})],$$

où :

$P_{f2}$ est le besoin frigorifique, exprimé en termes de puissance frigorifique, du deuxième espace E2
$P_{e2}$ est la puissance thermique dissipée à l'intérieur du deuxième espace E2,
$K$ est coefficient de transfert thermique,
$S_{u2}$ est la surface d'échange thermique du deuxième espace E2,
$T_2$ est la deuxième température de consigne,
$T_{ext}$ est la température à l'extérieur de l'armoire 1, et
a et b sont les coefficients mentionnés précédemment.

Enfin, l'organe de déduction 56 est programmé pour calculer le coefficient de répartition comme étant égal au rapport du besoin frigorifique du deuxième espace E2 sur le besoin frigorifique total de l'armoire 1.

L'organe de sélection 58 est programmé pour sélectionner le système de refroidissement dans une base de données (non représentée) en fonction de la première température de consigne, de la température extérieure, et du besoin de refroidissement. La base de données comprend une première catégorie de systèmes de refroidissement, constituée de systèmes de ventilation, et une deuxième catégorie de systèmes de refroidissement, constituée de systèmes de climatisation. Ici, la première catégorie est divisée en gammes, une première gamme étant constituée par les systèmes de ventilation à ventilateur de surpression unique, une deuxième gamme étant constituée par les systèmes de ventilation à ventilateurs de surpression doubles, et une troisième gamme étant constituée par les systèmes de ventilation à ventilateur d'extraction.

A cet effet, l'organe de sélection 58 est configuré pour calculer un écart entre la première température de consigne et la température extérieure, et pour comparer cet écart à un seuil prédéterminé, ledit seuil prédéterminé étant par exemple égal à 5°C.

L'organe de sélection 58 est également configuré pour choisir la première ou la deuxième catégorie de système de refroidissement en fonction du résultat de la comparaison entre l'écart et le seuil prédéterminé, et pour sélectionner le système de refroidissement dans la catégorie choisie, ladite catégorie choisie étant constituée par :

- la première catégorie lorsque l'écart est supérieur ou égal au seuil prédéterminé, et
- la deuxième catégorie lorsque l'écart est strictement inférieur audit seuil prédéterminé.

Plus particulièrement, l'organe de sélection 58 est configuré pour, lorsque l'écart est supérieur ou égal audit seuil prédéterminé :

- convertir le besoin frigorifique en un débit de ventilation de l'armoire électrique 1 nécessaire pour atteindre le besoin frigorifique, et
- sélectionner dans la première catégorie le système de ventilation qui, tout en fournissant un débit supérieur au débit de ventilation nécessaire majoré d'un coefficient de sécurité, est compatible avec la tension d'alimentation de l'armoire électrique 1 et avec les critères d'accessibilité de l'armoire électrique 1, et est le plus économe en énergie.

La conversion du besoin frigorifique en débit de ventilation nécessaire est avantageusement obtenue par application de la formule suivante :

$$Q_{Tot} = c \times \frac{P_{frigo}}{(d \times T_1 + e) - T_{ext}},$$

où :

$Q_{Tot}$ est le débit total nécessaire pour l'ensemble de l'armoire 1,
$P_{frigo}$ est le besoin frigorifique,
$T_1$ est la première température de consigne,
$T_{ext}$ est la température à l'extérieur de l'armoire 1, et
c, d et e sont des coefficients dépendant chacun de la puissance thermique dissipée dans les unités fonctionnelles électriques 22 dans le premier espace E1 de l'armoire électrique 1 et de la puissance thermique dissipée dans les unités fonctionnelles électriques 22 dans le deuxième espace E2 de l'armoire électrique 1, et des critères d'accessibilité de l'armoire 1.

La sélection d'un système de ventilation dans la troisième gamme est conditionnée à l'accessibilité de la paroi supérieure 12.

Lorsque l'écart est strictement inférieur audit seuil prédéterminé, l'organe de sélection 58 est plus particulièrement configuré pour :

- déterminer, pour chaque système de climatisation de la deuxième catégorie, la puissance frigorifique dudit système de climatisation pour un écart de température entre température ambiante et température intérieure constitué par l'écart de température entre la température extérieure et la première température de consigne, et
- sélectionner dans la deuxième catégorie, parmi les systèmes de climatisation dont la puissance frigorifique ainsi déterminée est supérieure au besoin frigorifique, celui qui, tout en étant compatible avec la tension d'alimentation de l'armoire électrique 1, est le plus économe en énergie.

L'organe de choix 60 est programmé pour choisir l'agencement du système de refroidissement sur au moins l'une des parois extérieures 10, 11, 12, 14, 15 de l'armoire électrique 1 en fonction du système de refroidissement sélectionné, des critères d'accessibilité de l'armoire électrique 1, et du coefficient de répartition.

Plus particulièrement, l'organe de choix 60 est programmé pour choisir :

- l'emplacement d'au moins un ventilateur de surpression 32 sur au moins une des parois avant et arrière 10, 11 et l'emplacement d'au moins une ouverture d'évacuation 34 sur au moins une des parois avant, arrière et latérales 10, 11, 14, 15 lorsque le système de refroidissement 30 sélectionné est un système de ventilation 31 à ventilateur(s) de surpression 32,
- l'emplacement d'au moins un ventilateur d'extraction 36 sur la paroi supérieure 12 de l'armoire électrique, et l'emplacement d'au moins une ouverture d'aspiration 38 sur au moins une des parois avant et arrière 10, 11 lorsque le système de refroidissement 30 sélectionné est un système de ventilation 31 à ventilateur d'évacuation 36, et
- l'emplacement du bloc de climatisation 42 sur la paroi avant 10 lorsque le système de refroidissement 30 sélectionné est un système de climatisation 32.

Ici, l'organe de choix 60 est programmé pour choisir :

- lorsque le système de refroidissement 30 sélectionné est un système de ventilation 31 à ventilateur de surpression 32 unique, et que :

  ∘ la paroi arrière 11 est accessible : un premier agencement dans lequel le ventilateur de surpression 32 est rapporté sur la paroi avant 10 et les ouvertures d'évacuation 34 comprennent une première ouverture d'évacuation 34 ménagée dans la paroi avant 10 et une deuxième ouverture d'évacuation 34 ménagée dans la paroi arrière 11, comme dans les variantes des Figures 5 et 12,
  ∘ la paroi arrière 11 est inaccessible, au moins une des parois latérales 14, 15 étant accessible: un deuxième agencement dans lequel le ventilateur de surpression 32 est rapporté sur la paroi avant 10 et les ouvertures d'évacuation 34 comprennent une première ouverture d'évacuation 34 ménagée dans la paroi avant 10 et une deuxième ouverture d'évacuation 34 ménagée dans la ou l'une des paroi latérales 14, 15 accessibles, comme dans les variantes des Figures 4 et 11,
  ∘ les parois arrière 11 et latérales 14, 15 sont toutes inaccessibles : un troisième agencement dans lequel le ventilateur de surpression 32 est rapporté sur la paroi avant 10 et l'ouverture d'évacuation 34 est unique et ménagée dans la paroi avant 10, comme dans les variantes des Figures 3 et 10 ;

- lorsque le système de refroidissement 30 sélectionné est un système de ventilation 31 à ventilateurs de surpression 32 doubles, et que :

  ∘ les dimensions de l'armoire électrique 1 permettent une installation des deux ventilateurs de surpression 32 sur la paroi avant 10 : le premier, le deuxième ou le troisième agencement décrit ci-dessus, selon l'accessibilité des parois arrière 11 et latérales 14, 15,
  ∘ les dimensions de l'armoire électrique 1 ne permettent pas une installation des deux ventilateurs de surpression 32 sur la paroi avant 10, la paroi arrière 11 étant accessible : un quatrième agencement dans lequel un premier ventilateur de surpression 32 est rapporté sur la paroi avant 10 et un deuxième ventilateur de surpression 32 est rapporté sur la paroi arrière 11, les ouvertures d'évacuation 34 comprenant une première ouverture d'évacuation 34 ménagée dans la paroi avant 10 et une deuxième ouverture d'évacuation 34 ménagée dans la paroi arrière 11, comme dans la variante de la Figure 6 ;

- lorsque le système de refroidissement 30 sélectionné est un système de ventilation 31 à ventilateur d'extraction 36, et que :

  ∘ la paroi arrière 11 est accessible : un cinquième agencement dans lequel le ventilateur d'extraction 36 est rapporté sur la paroi supérieure 12 et les ouvertures d'aspiration 38 comprennent une première ouverture d'aspiration 38 ménagée dans la paroi avant 10 et une deuxième ouverture d'aspiration 38 ménagée dans la paroi arrière 11, comme dans la variante de la Figure 8,
  ∘ la paroi arrière 11 est inaccessible : un sixième agencement dans lequel le ventilateur d'extraction 36 est rapporté sur la paroi supérieure 12 et l'ouverture d'aspiration 38 est unique et ménagée dans la paroi avant 10, comme dans les variantes des Figures 7 et 13 ;

- lorsque le système de refroidissement 30 sélectionné est un système de climatisation 32 : un septième agencement dans lequel le bloc de climatisation 42 est rapporté sur la paroi avant 10 de l'armoire électrique 1, un orifice de prélèvement d'air 44 et un orifice d'éjection d'air 46 étant ménagés dans la paroi avant 10 pour la circulation d'air entre l'intérieur de l'armoire 1 et le bloc de climatisation 42, comme dans les variantes des Figures 9 et 14.

L'organe de choix 60 est également programmé pour, lorsque l'agencement choisi est l'un des premier, deuxième, troisième et quatrième agencements :

- choisir l'emplacement du ou de chaque ventilateur de surpression 32 de sorte que la distance $D_{32,13}$ du ventilateur de surpression 32 à la paroi inférieure 13 soit :

    ◦ sensiblement égale à une valeur prédéterminée, par exemple 100 mm, lorsque l'armoire 1 est destinée à reposer sur un sol, ou
    ◦ la plus faible possible lorsque l'armoire 1 est destinée à être accrochée, et

- choisir l'emplacement du ou de chaque ouverture d'évacuation 34 de sorte que la distance de l'ouverture d'évacuation 34 à la paroi supérieure 12 soit la plus faible possible.

L'organe de choix 60 est encore programmé pour, lorsque l'agencement choisi est le cinquième ou le sixième agencement :

- choisir l'emplacement du ventilateur d'extraction 36 de sorte qu'il soit sensiblement centré sur la largeur de la paroi 12 et que la distance $D_{36,10}$ du ventilateur d'extraction 36 à la paroi avant 10 soit égale à :

$$C \times \frac{d \times T_1 + e - T_{ext}}{d \times T_2 + e - T_{ext}} \times D_{min} + (1 - C \times \frac{d \times T_1 + e - T_{ext}}{d \times T_2 + e - T_{ext}}) \times D_{max}$$ , où C est le coefficient de répartition, $D_{min}$ est une profondeur minimale prédéterminée d'installation du ventilateur d'extraction 36, $D_{max}$ est une profondeur maximale prédéterminée d'installation du ventilateur d'extraction 36, $T_1$ est la première température de consigne, $T_2$ est la deuxième température de consigne, $T_{ext}$ est la température extérieure, et d et e sont les coefficients précédemment définis ;

- choisir l'emplacement du ou de chaque ouverture d'aspiration 38 de sorte que la distance de l'ouverture d'aspiration 38 à la paroi inférieure 13 soit :

    ◦ sensiblement égale à une valeur prédéterminée, par exemple 100 mm, lorsque l'armoire 1 est destinée à reposer sur un sol, ou
    ◦ la plus faible possible lorsque l'armoire 1 est destinée à être accrochée.

Enfin, l'organe de choix 60 est programmé pour choisir l'emplacement du bloc de climatisation 42, lorsque l'agencement choisi est le septième agencement, de sorte que le bloc de climatisation 42 soit le plus proche possible de la paroi supérieure 12.

L'organe d'évaluation 62 est programmé pour évaluer la nécessité de former dans le plan de séparation P au moins une ouverture de circulation d'air 29 entre le premier espace E1 et le deuxième espace E2 en fonction du système de refroidissement 30 sélectionné et de l'agencement choisi pour ce système de refroidissement 30. En particulier, l'organe d'évaluation 62 est programmé pour évaluer la nécessité de former une ouverture de circulation d'air inférieure 29A dans la moitié inférieure du plan de séparation P et la nécessité de former une ouverture de circulation d'air supérieure 29B dans la moitié supérieure du plan de séparation P.

L'organe d'évaluation 62 est programmé pour conclure à la nécessité de former une ouverture de circulation d'air inférieure 29A exclusivement lorsque l'agencement choisi est l'un des premier, deuxième, troisième, sixième et septième agencements.

L'organe d'évaluation 62 est programmé pour conclure à la nécessité de former une ouverture de circulation d'air supérieure 29B dans tous les cas, à l'exclusion du cas dans lequel l'agencement choisi est le quatrième agencement.

L'organe d'évaluation 62 est également configuré pour évaluer la position et des dimensions de l'ouverture de circulation d'air supérieure 29B, lorsqu'elle est considérée nécessaire, de sorte qu'elle soit placée en extrémité de la cloison de séparation 20 et qu'elle présente une hauteur $H_{29B}$ prédéfinie, typiquement supérieure à 100 mm, et une largeur prédéfinie, typiquement égale à la largeur de la cloison de séparation 20.

L'organe d'évaluation 62 est encore configuré pour évaluer la position et les dimensions de l'ouverture de circulation d'air inférieure 29A, lorsqu'elle est considérée nécessaire, en fonction du coefficient de répartition.

En particulier, l'organe d'évaluation 62 est configuré pour, par défaut, positionner l'ouverture de circulation d'air inférieure 29A en extrémité de la cloison de séparation 20, et définir la largeur de l'ouverture de circulation d'air inférieure 29A de sorte qu'elle soit supérieure ou égale :

- dans le cas des premier, deuxième et troisième agencements, à la largeur du ventilateur de surpression 32,
- dans le cas du sixième agencement, à la largeur de l'ouverture d'aspiration 38, et

- dans le cas du septième agencement, à la largeur de l'orifice d'éjection d'air 46.

L'organe d'évaluation 62 est également configuré pour, par défaut, définir une première hauteur $H_{29A}$ de l'ouverture 29A de sorte qu'elle soit une fonction affine au moins par morceaux du coefficient de répartition, ladite fonction affine par morceaux présentant une première expression lorsque le coefficient de répartition est inférieur ou égal à 0,5 et une deuxième expression lorsque le coefficient de répartition est strictement supérieur à 0,5.

La fonction affine par morceaux est en particulier définie de la façon suivante :

- dans le cas des premier, deuxième et troisième agencements, sa première expresion est

$$2 \times C \times \frac{d \times T_1 + e - T_{ext}}{d \times T_2 + e - T_{ext}} \times (D_{32,13} + H_{32})$$

et sa deuxième expression est

$$\left(D_{32,13} + H_{32}\right) + (C \times \frac{d \times T_1 + e - T_{ext}}{d \times T_2 + e - T_{ext}} - 0,5) \times H_{32} \quad ,$$

- dans le cas du sixième agencement, sa première expression est $2 \times C \times \dfrac{d \times T_1 + e - T_{ext}}{d \times T_2 + e - T_{ext}} \times (D_{38,13} + H_{38})$ et sa deuxième expression est $(D_{38,13} + H_{38}) + \dfrac{(C \times \frac{d \times T_1 + e - T_{ext}}{d \times T_2 + e - T_{ext}} - 0,5) \times H_{38}}{}$, et

- dans le cas du septième agencement, les première et deuxième expressions sont identiques et sont constituées par $C \times (D_{46,13} + H_{46} - P_1)$,

C symbolisant, dans chacune de ces expressions, le coefficient de répartition, $T_1$ symbolisant la première température de consigne, $T_2$ symbolisant la deuxième température de consigne, $T_{ext}$ symbolisant la température extérieure, et d et e étant constitués par les coefficients précédemment définis.

La solution de refroidissement obtenue correspond alors à celle de l'une des variantes des Figures 3 à 5, 7 et 9.

L'organe d'évaluation 62 est également programmé pour ensuite contrôler la compatibilité de la première hauteur $H_{29A}$ ainsi obtenue avec la désignation des unités fonctionnelles électriques 22 installées dans l'armoire électrique 1, et pour :

- valider la position et la hauteur de l'ouverture de circulation 29A si la première hauteur $H_{29A}$ est compatible avec la désignation des unités fonctionnelles électriques 22 installées dans l'armoire électrique 1, et
- déplacer l'ouverture de circulation 29A en milieu de la cloison de séparation 20 si la première hauteur $H_{29A}$ est incompatible avec la désignation des unités fonctionnelles électriques 22 installées dans l'armoire électrique 1.

L'organe d'évaluation 62 est en particulier programmé pour, en cas d'incompatibilité de la première hauteur $H_{29A}$, définir la distance $D_{29,13}$ de l'ouverture de circulation 29A à la paroi inférieure 13 de sorte que cette distance $D_{29,13}$ soit égale :

- dans le cas des premier, deuxième et troisième agencements, à la distance $D_{32,13}$ du ventilateur de surpression 32 à la paroi inférieure 13,
- dans le cas du sixième agencement, à la distance $D_{38,13}$ de l'ouverture d'aspiration 38 à la paroi inférieure 13, et
- dans le cas du septième agencement, à $D_{46,13}$-$P_1$.

L'organe d'évaluation 62 est également programmé pour, toujours en cas d'incompatibilité de la première hauteur $H_{29A}$, définir une nouvelle hauteur $H_{29A}$ de l'ouverture de circulation 29A de sorte qu'elle soit égale :

- dans le cas des premier, deuxième et troisième agencements, au produit du coefficient de répartition par la hauteur $H_{32}$ du ventilateur de surpression 32,
- dans le cas du sixième agencement, au produit du coefficient de répartition par la hauteur $H_{38}$ de l'ouverture d'aspiration 38, et
- dans le cas du septième agencement, au produit du coefficient de répartition par la hauteur $H_{46}$ de l'orifice d'éjection d'air 46.

La solution de refroidissement obtenue correspond alors à celle de l'une des variantes des Figures 10 à 14.

Dans les autres cas, la solution de refroidissement obtenue correspond à la variante de :

- la Figure 6, lorsque l'agencement choisi est constitué par le quatrième agencement, ou
- la Figure 8, lorsque l'agencement choisi est constitué par le cinquième agencement.

L'organe de synthèse 64 est programmé pour recevoir des organes 58, 60, 62 des informations relatives au système de refroidissement 30 sélectionné, à l'agencement choisi et au positionnement et aux dimensions des éventuelles ouvertures 29 formées dans le plan de circulation P, et pour synthétiser ces informations sous la forme d'une synthèse de la solution de refroidissement déterminée. Cette synthèse est typiquement formée par une représentation visuelle de la solution de refroidissement déterminée.

L'organe de présentation 66 est configuré pour présenter la synthèse réalisée par l'organe de synthèse 64 sous une forme directement interprétable par un utilisateur du dispositif 50. A cet effet, l'organe de présentation 66 est typiquement constitué par un écran.

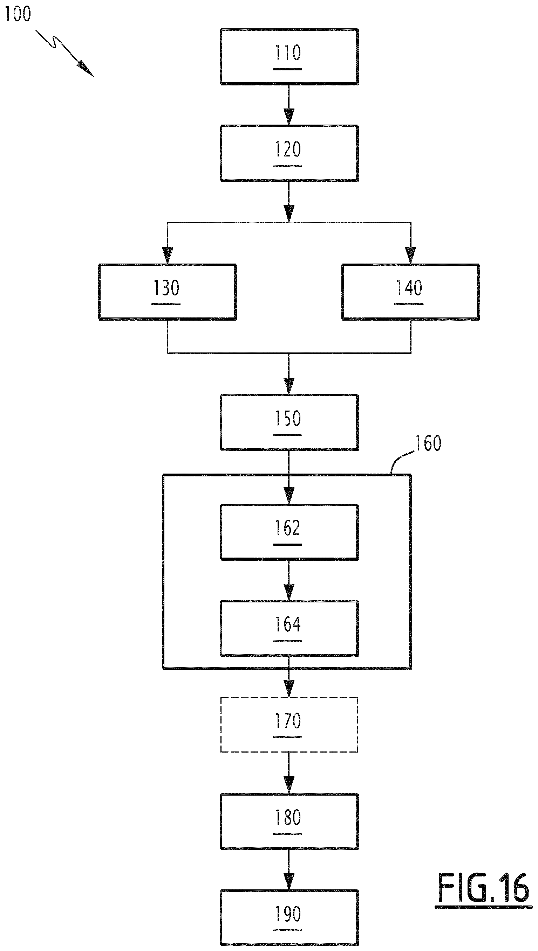

Un procédé 100 mis en oeuvre par le dispositif de détermination 50 va maintenant être décrit, en référence à la Figure 16.

Ce procédé 100 débute par une étape 110 d'entrée de données. Au cours de cette étape 110, un utilisateur du dispositif 50 saisit au moyen de l'organe d'entrée 52 des données relatives à l'armoire électrique 1 et des critères d'accessibilité de l'armoire électrique 1. Ces données et critères sont alors enregistrés dans une mémoire temporaire du dispositif de détermination 50.

Cette étape 110 est suivie d'une étape 120 de caractérisation, par l'organe de caractérisation 54, du besoin frigorifique de l'armoire électrique 1.

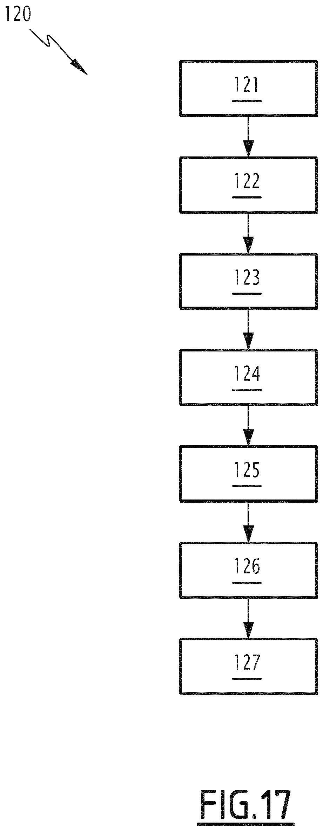

En référence à la Figure 17, cette étape 120 comprend les sous-étapes successives suivantes

- une sous-étape 121 de déduction d'un coefficient de transfert thermique des parois 10, 11, 12, 13, 14, 15 à partir du matériau desdites parois 10, 11, 12, 13, 14, 15,
- une sous-étape 122 de déduction d'une surface d'échange thermique à partir des critères d'accessibilité de l'armoire électrique 1 et des dimensions extérieures de l'armoire 1,
- une sous-étape 123 de déduction d'une puissance thermique dissipée totale à l'intérieur de l'armoire à partir de la désignation des unités fonctionnelles électriques 22 installées dans l'armoire électrique 1 et de leur taux de charge,
- une sous-étape 124 de calcul d'une température interne de l'armoire 1 en fonction de la température à l'extérieur de l'armoire 1, de la puissance thermique dissipée totale, du coefficient de transfert thermique et de la surface d'échange thermique,
- une sous-étape 125 de comparaison de la température interne au seuil de température,
- une sous-étape 126 de caractérisation du besoin frigorifique comme étant nul lorsque la température interne est inférieure au seuil de température, et
- une sous-étape 127 de calcul du besoin frigorifique en fonction de la température à l'extérieur de l'armoire 1, de la puissance thermique dissipée totale, du coefficient de transfert thermique, de la surface d'échange thermique et de la première température de consigne lorsque la température interne est supérieure audit seuil de température.

Au cours de la sous-étape 121, l'organe de caractérisation 54 déduit le coefficient de transfert thermique de la manière qui a été décrite plus haut.

Au cours de la sous-étape 122, l'organe de caractérisation 54 déduit la surface d'échange thermique de la manière qui a été décrite plus haut.

Au cours de la sous-étape 123, l'organe de caractérisation 54 déduit la puissance thermique dissipée totale à l'intérieur de l'armoire 1 de la manière qui a été décrite plus haut.

Au cours de la sous-étape 124, l'organe de caractérisation 54 calcule la température interne de l'armoire 1 de la manière qui a été décrite plus haut.

Au cours de la sous-étape 127, l'organe de caractérisation 54 calcule le besoin frigorifique de l'armoire 1 de la manière qui a été décrite plus haut.

De retour à la Figure 16, l'étape 120 est suivie d'une étape 130 de déduction du coefficient de répartition du besoin frigorifique et d'une étape 140 de sélection du système de refroidissement 30. En particulier, ces étapes font suite à la sous-étape 127 et ne surviennent pas lorsque la température interne calculée lors de la sous-étape 124 est inférieure au seuil de température.

Au cours de l'étape de déduction 130, l'organe de déduction 56 déduit le coefficient de répartition du besoin frigorifique en fonction des données relatives à l'armoire électrique.

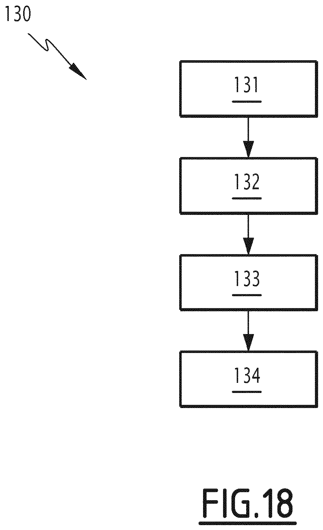

En référence à la Figure 18, l'étape de déduction 130 comprend les sous-étapes successives suivantes :

- une sous-étape 131 de déduction d'une surface d'échange thermique du deuxième espace E2 avec l'extérieur à partir des critères d'accessibilité de l'armoire électrique 1 et des dimensions extérieures de l'armoire 1,
- une sous-étape 132 de déduction d'une puissance thermique dissipée à l'intérieur du deuxième espace E2 à partir de la désignation des unités fonctionnelles électriques 22 installées dans l'armoire électrique 1 et de leur taux de charge,

- une sous-étape 133 de calcul d'un besoin frigorifique du deuxième espace E2 en fonction de la température à l'extérieur de l'armoire 1, de la puissance thermique dissipée à l'intérieur du deuxième espace E2, du coefficient de transfert thermique, de la surface d'échange thermique du deuxième espace E2 et de la deuxième température de consigne, et
- une sous-étape 134 de calcul d'un coefficient de répartition en fonction du besoin frigorifique du deuxième espace E2 et du besoin frigorifique total de l'armoire 1.

Au cours de la sous-étape 131, l'organe de déduction 56 déduit la surface d'échange thermique du deuxième espace E2 avec l'extérieur de la manière qui a été décrite plus haut.

Au cours de la sous-étape 132, l'organe de déduction 56 déduit la puissance thermique dissipée à l'intérieur du deuxième espace E2 de la manière qui a été décrite plus haut.

Au cours de la sous-étape 133, l'organe de déduction 56 calcule le besoin frigorifique du deuxième espace E2 de la manière qui a été décrite plus haut.

Au cours de la sous-étape 134, l'organe de déduction 56 calcule le coefficient de répartition de la manière qui a été décrite plus haut.

Au cours de l'étape de sélection 140, l'organe de sélection 58 sélectionne le système de refroidissement dans la base de données en fonction de la première température de consigne, de la température extérieure, et du besoin de refroidissement.

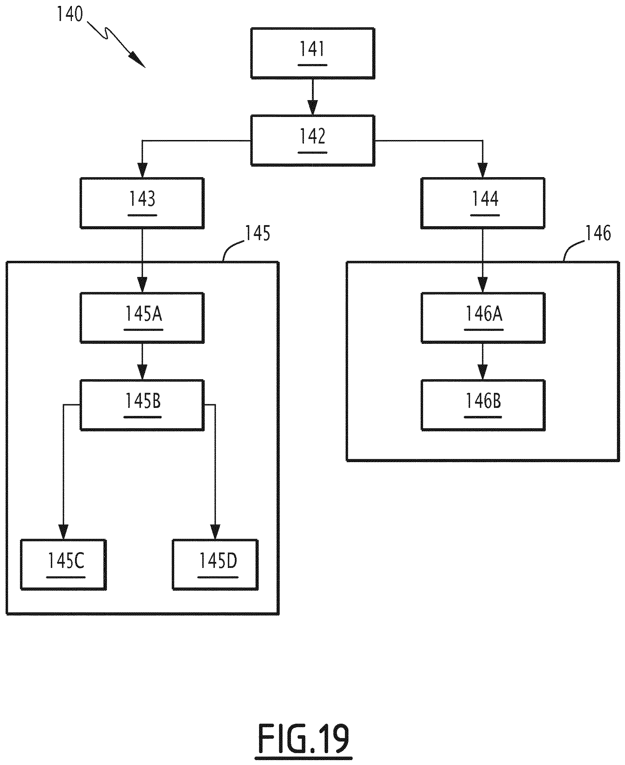

En référence à la Figure 19, l'étape de sélection 140 comprend les sous-étapes successives suivantes :

- une sous-étape 141 de calcul d'un écart entre la première température de consigne et la température extérieure,
- une sous-étape 142 de comparaison de cet écart à un seuil prédéterminé, par exemple égal à 5°C,
- une sous-étape 143 de choix de la première catégorie de système de refroidissement lorsque l'écart est strictement inférieur au seuil prédéterminé, et
- une sous-étape 144 de choix de la deuxième catégorie de système de refroidissement lorsque l'écart est supérieur ou égal au seuil prédéterminé.

L'étape 140 comprend également, à la suite de la sous-étape 143, une sous-étape 145 de sélection du système de refroidissement 30 dans la première catégorie et, à la suite de la sous-étape 144, une sous-étape 146 de sélection du système de refroidissement 30 dans la deuxième catégorie.

La sous-étape 145 comprend les sous-étapes successives suivantes :

- une sous-étape 145A de conversion du besoin frigorifique en un débit de ventilation de l'armoire électrique 1 nécessaire pour atteindre le besoin frigorifique,
- une sous-étape 145B de contrôle des critères d'accessibilité de l'armoire 1, lors de laquelle l'organe de sélection 58 vérifie si la paroi supérieure 12 est accessible, et
- lorsque la paroi supérieure 12 est accessible: une sous-étape 145C de sélection du système de ventilation qui, parmi tous les systèmes de ventilation de la première catégorie, fournit un débit supérieur au débit de ventilation nécessaire majoré d'un coefficient de sécurité, est compatible avec la tension d'alimentation de l'armoire électrique 1, et est le plus économe en énergie,
- lorsque la paroi supérieure 12 est accessible: une sous-étape 145D de sélection du système de ventilation qui, parmi les systèmes de ventilation des première et deuxième gammes, fournit un débit supérieur au débit de ventilation nécessaire majoré d'un coefficient de sécurité, est compatible avec la tension d'alimentation de l'armoire électrique 1, et est le plus économe en énergie.

Lors de la sous-étape 145A, l'organe de sélection 58 calcule le débit de ventilation nécessaire de la manière qui a été décrite plus haut.

La sous-étape 146 comprend les sous-étapes successives suivantes :

- une sous-étape 146A de détermination, pour chaque système de climatisation de la deuxième catégorie, de la puissance frigorifique dudit système de climatisation pour un écart de température entre température ambiante et température intérieure constitué par l'écart de température entre la température extérieure et la première température de consigne, et
- une sous-étape 146B de sélection du système de climatisation qui, parmi les systèmes de climatisation de la deuxième catégorie, a une puissance frigorifique supérieure au besoin frigorifique, est compatible avec la tension d'alimentation de l'armoire électrique 1, et est le plus économe en énergie.

De retour à la Figure 16, les étapes 130, 140 sont suivies d'une étape 150 de choix d'un agencement du système de ventilation sélectionné.

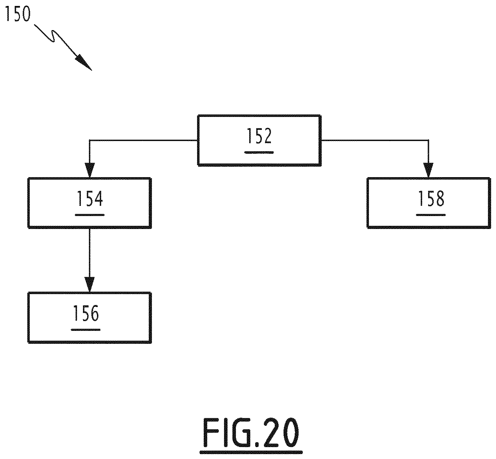

En référence à la Figure 20, cette étape 150 comprend une sous-étape 152 de vérification de la catégorie à laquelle appartient le système de ventilation 30 sélectionné, suivie :

- lorsque le système de ventilation 30 sélectionné appartient à la première catégorie, d'une sous-étape 154 de choix d'un emplacement du ou de chaque ventilateur 32, 36 et d'une sous-étape 156 de choix d'un emplacement de la ou chaque ouverture d'aspiration 38 ou d'évacuation 36, ou
- lorsque le système de ventilation 30 sélectionné appartient à la deuxième catégorie, d'une sous-étape 158 de choix d'un emplacement du bloc de climatisation 42.

Lors des sous-étapes 154 et 156, l'organe de choix 60 choisit l'emplacement du ou de chaque ventilateur 32, 36 et l'emplacement de la ou chaque ouverture d'aspiration 38 ou d'évacuation 34 de sorte que lesdits emplacements respectent :

- le premier agencement, lorsque le système de ventilation 31 sélectionné est un système à ventilateur de surpression compatible avec une installation de chaque ventilateur de surpression 32 sur la paroi avant 10 et que la paroi arrière 11 est accessible,
- le deuxième agencement, lorsque le système de ventilation 31 sélectionné est un système à ventilateur de surpression compatible avec une installation de chaque ventilateur de surpression 32 sur la paroi avant 10, que la paroi arrière 11 est inaccessible et l'une des parois latérales 14, 15 est accessible,
- le troisième agencement, lorsque le système de ventilation 31 sélectionné est un système à ventilateur de surpression compatible avec une installation de chaque ventilateur de surpression 32 sur la paroi avant 10, et que ni la paroi arrière 11 ni aucune des parois latérales 14, 15 n'est accessible,
- le quatrième agencement, lorsque le système de ventilation 31 sélectionné est un système à ventilateur de surpression incompatible avec une installation de chaque ventilateur de surpression 32 sur la paroi avant 10,
- le cinquième agencement, lorsque le système de ventilation 31 sélectionné est un système à ventilateur d'extraction et que la paroi arrière 11 est accessible, et
- le sixième agencement, lorsque le système de ventilation 31 sélectionné est un système à ventilateur d'extraction et que la paroi arrière 11 est inaccessible.

En outre, lorsque le système de ventilation 31 sélectionné est un système à ventilateur d'extraction, l'organe de choix 60 définit lors de la sous-étape 156 la profondeur d'installation du ventilateur d'extraction 36 de sorte que sa distance $D_{36,10}$ à la paroi avant 10 vérifie la relation donnée plus haut.

Lors de la sous-étape 158, l'organe de choix 60 choisit l'emplacement du bloc de climatisation 42 de sorte qu'il respecte le septième agencement décrit plus haut.

De retour à la Figure 16, l'étape 150 est suivie d'une étape 160 d'évaluation de la nécessité de former une ouverture de circulation d'air 29 dans le plan de séparation P.

Au cours de cette étape 160, l'organe d'évaluation 62 vérifie lors d'une sous-étape 162 le type d'agencement choisi lors de l'étape 150 puis déduit, lors d'une sous-étape 164, selon l'agencement choisi, si une ouverture de circulation d'air 29 est nécessaire ou non.

Si l'agencement choisi est constitué par le quatrième agencement, l'organe d'évaluation 62 conclut à l'absence de nécessité de former une ouverture de circulation d'air 29 dans le plan de séparation P.

Si l'agencement choisi est constitué par le cinquième agencement, l'organe d'évaluation 62 déduit que seule une ouverture de circulation d'air supérieure 29B est nécessaire.

Si l'agencement choisi est constitué par le premier, deuxième, troisième, sixième ou septième agencement, l'organe d'évaluation 62 déduit que sont nécessaires à la fois une ouverture de circulation d'air supérieure 29B et une ouverture de circulation d'air inférieure 29A.

Lorsqu'il est conclu à la nécessité de former une ouverture de circulation d'air 29 dans le plan de séparation P, l'étape 160 est suivie d'une étape 170 d'évaluation de la position et des dimensions de cette ouverture de circulation d'air 29. Sinon, l'étape 160 est directement suivie d'une étape 180 de synthèse de la solution de refroidissement déterminée.

Lors de l'étape 170, l'organe d'évaluation 62 détermine la position et les dimensions de l'ouverture de circulation d'air supérieure 29B et, le cas échéant, de l'ouverture de circulation d'air inférieure 29A, de la manière décrite plus haut.

L'étape 170 est suivie de l'étape de synthèse 180.

Lors de l'étape de synthèse 180, l'organe de synthèse 64 crée une synthèse de la solution de refroidissement déterminée en fonction d'informations transmises par les organes 58, 60, 62 et relatives au système de refroidissement 30 sélectionné, à l'agencement choisi et au positionnement et aux dimensions des éventuelles ouvertures 29 formées dans le plan de circulation P.

L'étape de synthèse 180 est suivie d'une étape de présentation 190. Lors de cette étape 190, la synthèse de la solution de refroidissement déterminée est présentée par l'organe de présentation 66 à l'utilisateur du dispositif 50. Cette présentation est typiquement réalisée sous forme visuelle.

Grâce à l'invention décrite ci-dessus, la sélection d'une solution de refroidissement de l'armoire électrique 1 se fait aisément. Il est ainsi possible de réduire facilement la consommation électrique de l'armoire 1 en choisissant pour la réaliser une solution de refroidissement qui minimisera la puissance frigorifique nécessaire à la régulation des températures moyennes de fonctionnement $T1_{moy}$, $T2_{moy}$.

On notera que l'invention a été décrite pour le cas dans lequel le coefficient de répartition est égal au rapport du besoin frigorifique du deuxième espace E2 sur le besoin frigorifique total de l'armoire 1. En variante, ce coefficient de répartition est égal au rapport du besoin frigorifique du premier espace E1 sur le besoin frigorifique total de l'armoire 1, le besoin frigorifique du premier espace E1 étant exprimé au moyen de la formule suivante :

$$P_{f1} = P_{e1} - [K \times S_{u1} \times ((a \times T_1 + b) - T_{ext})],$$

où :

$P_{f1}$ est le besoin frigorifique, exprimé en termes de puissance frigorifique, du premier espace E1

$P_{e1}$ est la puissance thermique dissipée à l'intérieur du premier espace E1, déterminée en fonction de la désignation des unités fonctionnelles électriques 22 installées dans l'armoire électrique 1 et de leur taux de charge,

K est le coefficient de transfert thermique,

$S_{u1}$ est la surface d'échange thermique du premier espace E1, égale à la somme de la surface de la paroi avant 10 avec la surface de la portion avant de chacune des parois supérieure 12 et latérales 14, 15 accessibles, ladite portion avant étant constituée par la portion de la paroi 12, 14, 15 s'étendant entre le plan P et la paroi avant 10

$T_1$ est la première température de consigne,

$T_{ext}$ est la température à l'extérieur de l'armoire 1, et

a et b sont les coefficients mentionnés précédemment.

L'homme du métier saura sans peine adapter à cette variante les formules données ci-dessus pour le calcul de la hauteur $H_{29A}$ de l'ouverture 29A et de la distance $D_{36,10}$ du ventilateur d'extraction 36 à la paroi avant 10.

## Revendications

1. Procédé (100) de détermination d'une solution de refroidissement pour une armoire électrique (1) dans laquelle sont logées une pluralité d'unités fonctionnelles électriques (22), lesdites unités fonctionnelles électriques (22) étant agencées suivant un plan de séparation (P) de l'armoire électrique délimitant :

   - une première zone thermique (E1) formée par un premier espace de l'armoire électrique situé d'un premier côté du plan de séparation (P), et
   - une seconde zone thermique (E2) formée par un deuxième espace de l'armoire électrique situé d'un deuxième côté du plan de séparation (P),

   **caractérisé en ce que** le procédé (100) est mis en oeuvre par ordinateur et comprend les étapes suivantes :

   - caractérisation (120), à partir de données relatives à l'armoire électrique (1), d'un besoin de refroidissement de l'armoire électrique (1),
   - déduction (130), en fonction des données relatives à l'armoire électrique (1), d'un coefficient de répartition du besoin de refroidissement entre les première et deuxième zones thermiques (E1, E2),
   - sélection (140), en fonction dudit besoin de refroidissement, d'un système de refroidissement (30) pour refroidir l'armoire électrique (1),
   - choix (150), en fonction du système de refroidissement (30) sélectionné et de critères d'accessibilité de l'armoire électrique (1), d'un agencement du système de refroidissement (30) sur au moins une paroi extérieure (10, 11, 12, 13, 14, 15) de l'armoire électrique (1), et
   - évaluation (160), en fonction du système de refroidissement (30) sélectionné et de l'agencement choisi pour ce système de refroidissement (30), de la nécessité de former dans une moitié inférieure du plan de séparation (P) une ouverture de circulation d'air inférieure (29A) entre la première zone thermique (E1) et la deuxième zone thermique (E2), et

- lorsqu'il est conclu à la nécessité de former une ouverture de circulation d'air inférieure (29A), évaluation (170) de la position et des dimensions de cette ouverture de circulation d'air inférieure (29A) en fonction du coefficient de répartition.

**2.** Procédé de détermination (100) selon la revendication 1, dans lequel les données relatives à l'armoire électrique (1) comprennent des paramètres environnementaux de l'armoire électrique (1), dont une température extérieure hors de l'armoire électrique (1), et une première température de consigne pour la première zone thermique (E1).

**3.** Procédé de détermination (100) selon la revendication 2, dans lequel la sélection (140) du système de refroidissement (30) comprend le choix d'une catégorie de système de refroidissement (143, 144), suivie de la sélection (145, 156) du système de refroidissement (30) dans la catégorie de système de refroidissement choisie, ledit choix de la catégorie de système de refroidissement (143, 144) comprenant le choix d'une première catégorie constituée de systèmes de ventilation (143) lorsque l'écart entre la température extérieure et la température de consigne est supérieur ou égal à un seuil prédéterminé, et le choix d'une deuxième catégorie constituée de systèmes de climatisation (144) lorsque l'écart entre la température extérieure et la température de consigne est strictement inférieur audit seuil prédéterminé.

**4.** Procédé de détermination (100) selon la revendication 3, dans lequel la sélection (140) du système de refroidissement (30) comprend, lorsque la catégorie de système de refroidissement choisie est constituée par la première catégorie, la détermination (145A) d'un débit de ventilation nécessaire pour atteindre le besoin de refroidissement, le système de refroidissement (30) étant sélectionné dans ladite première catégorie en fonction du débit de ventilation ainsi déterminé.

**5.** Procédé de détermination (100) selon la revendication 3 ou 4, dans lequel la sélection (140) du système de refroidissement (30) comprend, lorsque la catégorie de système de refroidissement choisie est constituée par la deuxième catégorie, la détermination (146A), pour au moins un système de climatisation de la deuxième catégorie, d'une puissance frigorifique dudit système de climatisation pour un écart de température entre température ambiante et température intérieure constitué par l'écart de température entre la température extérieure et la température de consigne, le système de refroidissement (30) étant sélectionné dans ladite deuxième catégorie par comparaison du besoin de refroidissement avec la ou chaque puissance frigorifique ainsi déterminée.

**6.** Procédé de détermination (100) selon la revendication 5, dans lequel l'étape d'évaluation (160, 170) conclut à la nécessité de former une ouverture de circulation d'air inférieure (29A) lorsque la catégorie de système de refroidissement choisie est constituée par la deuxième catégorie.

**7.** Procédé de détermination (100) selon l'une quelconque des revendications 3 à 6, dans lequel le choix (150) de l'agencement du système de refroidissement (30) comprend le choix (154) de l'emplacement d'au moins un ventilateur de surpression (32) ou d'extraction (36) sur au moins une paroi extérieure (10, 11, 12, 13, 14, 15) de l'armoire électrique (1), et le choix (156) de l'emplacement d'au moins une ouverture d'évacuation (34), respectivement d'au moins une ouverture d'aspiration (38), sur au moins une paroi extérieure (10, 11, 12, 13, 14, 15) de l'armoire électrique (1).

**8.** Procédé de détermination (100) selon la revendication 7, dans lequel l'étape d'évaluation (160, 170) conclut à la nécessité de former une ouverture de circulation d'air inférieure (29A) lorsque le ou chaque emplacement de ventilateur de surpression (32) ou d'ouverture d'aspiration (38) choisi est localisé sur une paroi (10, 14, 15) de la première zone thermique (E1), aucun emplacement de ventilateur de surpression (32) ou d'ouverture d'aspiration (38) choisi n'étant localisé sur une paroi (11, 14, 15) de la deuxième zone thermique (E2).

**9.** Procédé de détermination (100) selon la revendication 6 ou 8, dans lequel l'ouverture de circulation d'air inférieure (29A) présente une hauteur qui est une fonction affine, au moins par morceaux, du coefficient de répartition.

**10.** Procédé de détermination (100) selon l'une quelconque des revendications 3 à 9, dans lequel, lorsque le choix (150) de l'agencement du système de refroidissement (30) comprend le choix de l'emplacement d'au moins un ventilateur d'extraction (36) sur une paroi supérieure (12) de l'armoire électrique (1), le choix (150) de l'agencement du système de refroidissement (30) comprend une étape supplémentaire de définition d'une profondeur de positionnement dudit ventilateur d'extraction (36), ladite profondeur de positionnement étant définie en fonction du coefficient de répartition.

**11.** Procédé de détermination (100) selon l'une quelconque des revendications précédentes, dans lequel les données relatives à l'armoire électrique (1) comprennent au moins un élément parmi : les dimensions extérieures de l'armoire électrique (1), la profondeur de localisation du plan de séparation (P), une désignation des unités fonctionnelles électriques (22) installées dans l'armoire électrique (1) et de leurs caractéristiques, un taux d'utilisation de chacune des unités fonctionnelles électriques (22), une altitude d'installation de l'armoire électrique (1), une nature du matériau composant les parois extérieures (10, 11, 12, 13, 14, 15) de l'armoire électrique (1), une tension d'alimentation de l'armoire électrique (1).

**12.** Procédé de détermination (100) selon l'une quelconque des revendications précédentes, dans lequel le coefficient de répartition du besoin de refroidissement est également déduit en fonction d'une première température de consigne pour la première zone thermique (E1) et/ou d'une deuxième température de consigne pour la deuxième zone thermique (E2).

**13.** Système de traitement de données (74) pour la détermination d'une solution de refroidissement pour une armoire électrique (1) dans laquelle sont logées une pluralité d'unités fonctionnelles électriques (22), lesdites unités fonctionnelles électriques (22) étant agencées suivant un plan de séparation (P) de l'armoire électrique (1) délimitant :

   - une première zone thermique (E1) formée par un premier espace de l'armoire électrique (1) situé d'un premier côté du plan de séparation (P), et
   - une seconde zone thermique (E2) formée par un deuxième espace de l'armoire électrique (1) situé d'un deuxième côté du plan de séparation (P),

   **caractérisé en ce que** le système de traitement de données (74) comprend :

   - un organe de caractérisation (54) pour caractériser, à partir de données relatives à l'armoire électrique (1), un besoin de refroidissement de l'armoire électrique (1),
   - un organe de sélection (58) pour sélectionner, en fonction dudit besoin de refroidissement, un système de refroidissement (30) pour refroidir l'armoire électrique (1),
   - un organe de choix (60) pour choisir, en fonction du système de refroidissement (30) sélectionné et de critères d'accessibilité de l'armoire électrique (1), un agencement du système de refroidissement (30) sur au moins une paroi extérieure (10, 11, 12, 13, 14, 15) de l'armoire électrique (1),
   - un organe de déduction (56) pour déduire, en fonction des données relatives à l'armoire électrique (1), un coefficient de répartition du besoin de refroidissement entre les première et deuxième zones thermiques (E1, E2), et
   - un organe d'évaluation (62) pour évaluer, en fonction du système de refroidissement (30) sélectionné et de l'agencement choisi pour ce système de refroidissement (30), la nécessité de former dans une moitié inférieure du plan de séparation (P) une ouverture de circulation d'air inférieure (29A) entre la première zone thermique (E1) et la deuxième zone thermique (E2) et pour évaluer la position et les dimensions de cette ouverture de circulation d'air inférieure (29A), lorsqu'elle est considérée nécessaire, en fonction du coefficient de répartition.

**14.** Produit programme d'ordinateur comprenant des instructions qui, lorsque le programme est exécuté par un ordinateur, conduisent celui-ci à mettre en oeuvre un procédé (100) selon l'une quelconque des revendications 1 à 12.

**15.** Support physique d'enregistrement lisible par ordinateur comprenant des instructions qui, lorsqu'elles sont exécutées par un ordinateur, conduisent celui-ci à mettre en œuvre un procédé (100) selon l'une quelconque des revendications 1 à 12.

**Patentansprüche**

**1.** Verfahren (100) zur Ermittlung einer Kühllösung für einen Schaltschrank (1), in dem eine Vielzahl elektrischer Funktionseinheiten (22) untergebracht ist, wobei die elektrischen Funktionseinheiten (22) gemäß einer Trennungsebene (P) des Schaltschranks eingerichtet sind, die begrenzt:

   - eine erste thermische Zone (E1), die von einem ersten Raum des Schaltschranks gebildet wird, der sich auf einer ersten Seite der Trennungsebene (P) befindet, und
   - eine zweite thermische Zone (E2), die von einem zweiten Raum des Schaltschranks gebildet wird, der sich auf einer zweiten Seite der Trennungsebene (P) befindet,

**dadurch gekennzeichnet, dass** das Verfahren (100) von einem Rechner durchgeführt wird und die folgenden Schritte umfasst:

- Charakterisieren (120), ausgehend von Daten, die sich auf den Schaltschrank (1) beziehen, eines Kühlbedarfs des Schaltschranks (1),
- Ableiten (130), in Abhängigkeit von den Daten, die sich auf den Schaltschrank beziehen (1), eines Verteilungskoeffizienten des Kühlbedarfs zwischen der ersten und zweiten thermischen Zone (E1, E2),
- Auswählen (140), in Abhängigkeit vom Kühlbedarf, eines Kühlsystems (30) zur Kühlung des Schaltschranks (1),
- Wählen (150), in Abhängigkeit vom ausgewählten Kühlsystem (30) und von Zugänglichkeitskriterien des Schaltschranks (1), einer Anordnung des Kühlsystems (30) auf mindestens einer Außenwand (10, 11, 12, 13, 14, 15) des Schaltschranks (1), und
- Beurteilen (160), in Abhängigkeit vom ausgewählten Kühlsystem (30) und von der für dieses Kühlsystem (30) gewählten Anordnung, der Notwendigkeit, in einer unteren Hälfte der Trennungsebene (P) eine untere Luftzirkulationsöffnung (29A) zwischen der ersten thermischen Zone (E1) und der zweiten thermischen Zone (E2) zu bilden, und
- wenn auf die Notwendigkeit geschlossen wurde, eine untere Luftzirkulationsöffnung (29A) zu bilden, Beurteilen (170) der Position und der Abmessungen dieser unteren Luftzirkulationsöffnung (29A) in Abhängigkeit vom Verteilungskoeffizienten.

2. Ermittlungsverfahren (100) nach Anspruch 1, wobei die Daten, die sich auf den Schaltschrank beziehen (1), Umweltparameter des Schaltschranks (1) umfassen, darunter eine Außentemperatur außerhalb des Schaltschranks (1) und eine erste Solltemperatur für die erste thermische Zone (E1).

3. Ermittlungsverfahren (100) nach Anspruch 2, wobei das Auswählen (140) des Kühlsystems (30) das Wählen einer Kühlsystemkategorie (143, 144) umfasst, gefolgt vom Auswählen (145, 156) des Kühlsystems (30) aus der gewählten Kühlsystemkategorie, wobei das Wählen der Kühlsystemkategorie (143, 144) das Wählen einer ersten Kategorie gebildet aus Lüftungssystemen (143), wenn der Unterschied zwischen der Außentemperatur und der Solltemperatur größer oder gleich einem vorher festgelegten Sollwert ist, und das Wählen einer zweiten Kategorie, gebildet aus Klimatisierungssystemen (144), wenn der Unterschied zwischen der Außentemperatur und der Solltemperatur strikt niedriger als der vorher festgelegte Sollwert ist, umfasst.

4. Ermittlungsverfahren (100) nach Anspruch 3, wobei die Auswahl (140) des Kühlsystems (30), wenn die gewählte Kühlsystemkategorie aus der ersten Kategorie besteht, das Ermitteln (145A) eines Lüftungsstroms umfasst, der notwendig ist, um den Kühlbedarf zu erreichen, wobei das Kühlsystem (30) aus der ersten Kategorie in Abhängigkeit vom derart bestimmten Lüftungsstrom ausgewählt wird.

5. Ermittlungsverfahren (100) nach Anspruch 3 oder 4, wobei die Auswahl (140) des Kühlsystems (30), wenn die gewählte Kühlsystemkategorie aus der zweiten Kategorie besteht, das Ermitteln (146A), für mindestens ein Klimatisierungssystem der zweiten Kategorie, einer Kühlleistung des Klimatisierungssystems für eine Temperaturdifferenz zwischen Raumtemperatur und Innentemperatur umfasst, die aus der Temperaturdifferenz zwischen der Außentemperatur und der Solltemperatur besteht, wobei das Kühlsystem (30) aus der zweiten Kategorie durch Vergleich des Kühlbedarfs mit der oder jeder derart bestimmten Kühlleistung ausgewählt wird.

6. Ermittlungsverfahren (100) nach Anspruch 5, wobei der Schritt des Beurteilens (160, 170) auf die Notwendigkeit schließt, eine untere Luftzirkulationsöffnung (29A) zu bilden, wenn die gewählte Kühlsystemkategorie aus der zweiten Kategorie besteht.

7. Ermittlungsverfahren (100) nach einem der Ansprüche 3 bis 6, wobei die Wahl (150) der Anordnung des Kühlsystems (30) das Wählen (154) der Stelle für mindestens einen Überdruck- (32) oder Ausleitungslüfter (36) auf mindestens einer Außenwand (10, 11, 12, 13, 14, 15) des Schaltschranks (1) und das Wählen (156) der Stelle für mindestens eine Ausleitungsöffnung (34) beziehungsweise mindestens eine Ansaugöffnung (38) auf mindestens einer Außenwand (10, 11, 12, 13, 14, 15) des Schaltschranks (1) umfasst.

8. Ermittlungsverfahren (100) nach Anspruch 7, wobei der Schritt des Beurteilens (160, 170) auf die Notwendigkeit schließt, eine untere Luftzirkulationsöffnung (29A) zu bilden, wenn die oder jede gewählte Stelle eines Überdrucklüfters (32) oder einer Ansaugöffnung (38) auf einer Wand (10, 14, 15) der ersten thermischen Zone (E1) lokalisiert ist, wobei keine gewählte Stelle eines Überdrucklüfters (32) oder einer Ansaugöffnung (38) auf einer Wand (11, 14, 15) der zweiten thermischen Zone (E2) lokalisiert ist.

9. Ermittlungsverfahren (100) nach Anspruch 6 oder 8, wobei die untere Luftzirkulationsöffnung (29A) eine Höhe aufweist, die eine affine Funktion, mindestens in Teilen, des Verteilungskoeffizienten ist.

10. Ermittlungsverfahren (100) nach einem der Ansprüche 3 bis 9, wobei, wenn die Wahl (150) der Anordnung des Kühlsystems (30) die Wahl der Stelle von mindestens einem Ausleitungslüfter (36) auf einer oberen Wand (12) des Schaltschranks (1) umfasst, die Wahl (150) der Anordnung des Kühlsystems (30) einen zusätzlichen Schritt des Festlegens einer Positionierungstiefe des Ausleitungslüfters (36) umfasst, wobei die Positionierungstiefe in Abhängigkeit vom Verteilungskoeffizienten festgelegt wird.

11. Ermittlungsverfahren (100) nach einem der vorangehenden Ansprüche, wobei die Daten, die sich auf den Schaltschrank beziehen (1), mindestens ein Element umfassen von: den Außenabmessungen des Schaltschranks (1), der Lokalisierungstiefe der Trennungsebene (P), einer Bezeichnung der im Schaltschrank (1) installierten elektrischen Funktionseinheiten (22) und ihrer Merkmale, einer Benutzungsrate von jeder der elektrischen Funktionseinheiten (22), einer Installationshöhe des Schaltschranks (1), einer Art des Materials, das die Außenwände (10, 11, 12, 13, 14, 15) des Schaltschranks (1) bildet, einer Versorgungsspannung des Schaltschranks (1).

12. Ermittlungsverfahren (100) nach einem der vorangehenden Ansprüche, wobei der Verteilungskoeffizient des Kühlbedarfs ebenfalls in Abhängigkeit von einer ersten Solltemperatur für die erste thermische Zone (E1) und/oder einer zweiten Solltemperatur für die zweite thermische Zone (E2) abgeleitet wird.

13. Datenverarbeitungssystem (74) für die Ermittlung einer Kühllösung für einen Schaltschrank (1), in dem eine Vielzahl elektrischer Funktionseinheiten (22) untergebracht sind, wobei die elektrischen Funktionseinheiten (22) gemäß einer Trennungsebene (P) des Schaltschranks (1) eingerichtet sind, die begrenzt:

   - eine erste thermische Zone (E1), die von einem ersten Raum des Schaltschranks (1) gebildet wird, der sich auf einer ersten Seite der Trennungsebene (P) befindet, und
   - eine zweite thermische Zone (E2), die von einem zweiten Raum des Schaltschranks (1) gebildet wird, der sich auf einer zweiten Seite der Trennungsebene (P) befindet,

   **dadurch gekennzeichnet, dass** das Datenverarbeitungssystem (74) umfasst:

   - ein Charakterisierungsorgan (54) zum Charakterisieren, ausgehend von Daten, die sich auf den Schaltschrank (1) beziehen, eines Kühlbedarfs des Schaltschranks (1),
   - ein Auswahlorgan (58) zum Auswählen, in Abhängigkeit vom Kühlbedarf, eines Kühlsystems (30) zur Kühlung des Schaltschranks (1),
   - ein Wahlorgan (60) zum Wählen, in Abhängigkeit vom ausgewählten Kühlsystem (30) und von Zugänglichkeitskriterien des Schaltschranks (1), einer Anordnung des Kühlsystems (30) auf mindestens einer Außenwand (10, 11, 12, 13, 14, 15) des Schaltschranks (1),
   - ein Ableitungsorgan (56) zum Ableiten, in Abhängigkeit von den Daten, die sich auf den Schaltschrank beziehen (1), eines Verteilungskoeffizienten des Kühlbedarfs zwischen der ersten und zweiten thermischen Zone (E1, E2), und
   - ein Beurteilungsorgan (62) zum Beurteilen, in Abhängigkeit vom ausgewählten Kühlsystems (30) und von der für dieses Kühlsystem (30) gewählten Anordnung, der Notwendigkeit, in einer unteren Hälfte der Trennungsebene (P) eine untere Luftzirkulationsöffnung (29A) zwischen der ersten thermischen Zone (E1) und der zweiten thermischen Zone (E2) zu bilden, und zum Beurteilen der Position und der Abmessungen dieser unteren Luftzirkulationsöffnung (29A), wenn sie als notwendig erachtet wird, in Abhängigkeit vom Verteilungskoeffizienten.

14. Rechnerprogrammprodukt, umfassend Befehle, die, wenn das Programm von einem Rechner ausgeführt wird, diesen veranlassen, ein Verfahren (100) nach einem der Ansprüche 1 bis 12 durchzuführen.

15. Rechnerlesbares physisches Speichermedium, umfassend Befehle, die, wenn sie von einem Rechner ausgeführt werden, diesen veranlassen, ein Verfahren (100) nach einem der Ansprüche 1 bis 12 durchzuführen.


**Claims**

1. A method (100) for determining a cooling solution for an electrical cabinet (1) in which a plurality of electrical functional units (22) are housed, said electrical functional units (22) being arranged along a separation plane (P) of the electrical cabinet delimiting:

- a first heat zone (E1) formed by a first area of the electrical cabinet located on a first side of the separation plane (P), and
- a second heat zone (E2) formed by a second area of the electrical cabinet located on a second side of the separation plane (P),

**characterized in that** the method (100) is implemented by computer and comprises the following steps:

- characterizing (120), from data relative to the electrical cabinet (1), a cooling need of the electrical cabinet (1),
- deducing (130), based on the data relative to the electrical cabinet (1), a distribution coefficient of the cooling need between the first and second heat zones (E1, E2),
- selecting (140), based on said cooling need, a cooling system (30) to cool the electrical cabinet (1),
- choosing (150), based on the selected cooling system (30) and accessibility criteria of the electrical cabinet (1), an arrangement of the cooling system (30) on at least one outer wall (10, 11, 12, 13, 14, 15) of the electrical cabinet (1), and
- evaluating (160), based on the selected cooling system (30) and the arrangement chosen for this cooling system (30), the need to form, in a lower half of the separation plane (P), a lower air circulation opening (29A) between the first heat zone (E1) and the second heat zone (E2), and
- when it is found to be necessary to form a lower air circulation opening (29A), evaluating (170) the position and dimensions of this lower air circulation opening (29A) based on the distribution coefficient.

2. The determining method (100) according to claim 1, wherein the data relative to the electrical cabinet (1) comprises environmental parameters of the electrical cabinet (1), including an exterior temperature outside the electrical cabinet (1), and a first setpoint temperature for the first heat zone (E1).

3. The determining method (100) according to claim 2, wherein the selection (140) of the cooling system (30) comprises choosing a category of cooling system (143, 144), followed by selecting (145, 156) the cooling system (30) in the chosen category of cooling system, said choice of the category of cooling system (143, 144) comprising choosing a first category made up of ventilation systems (143) when the gap between the exterior temperature and the setpoint temperature is greater than or equal to a predetermined threshold, and choosing a second category made up of air conditioning systems (144) when the gap between the exterior temperature and the setpoint temperature is strictly less than said predetermined threshold.

4. The determining method (100) according to claim 3, wherein the selection (140) of the cooling system (30) comprises, when the chosen category of cooling system consists of the first category, determining (145A) a ventilation flow rate necessary to meet the cooling need, the cooling system (30) being selected in said first category based on the ventilation flow rate thus determined.

5. The determining method (100) according to claim 3 or 4, wherein the selection (140) of the cooling system (30) comprises, when the chosen category of cooling system consists of the second category, determining (146A), for at least one air conditioning system of the second category, a cooling capacity of said air conditioning system for a temperature gap between ambient temperature and interior temperature consisting of the temperature gap between the exterior temperature and the setpoint temperature, the cooling system (30) being selected from said second category by comparing the cooling need with the or each cooling capacity thus determined.

6. The determining method (100) according to claim 5, wherein the evaluation step (160, 170) finds that it is necessary to form a lower air circulation opening (29A) when the chosen category of cooling system consists of the second category.

7. The determining method (100) according to any one of claims 3 to 6, wherein the choice (150) of the arrangement of the cooling system (30) comprises choosing (154) the location of at least one negative pressure fan (32) or exhaust fan (36) of at least one outer wall (10, 11, 12, 13, 14, 15) of the electrical cabinet (1), and choosing (156) the location of at least one discharge opening (34), respectively of at least one suction opening (38), on at least one outer wall (10, 11, 12, 13, 14, 15) of the electrical cabinet (1).

8. The determining method (100) according to claim 7, wherein the evaluation step (160, 170) finds that it is necessary to form a lower air circulation opening (29A) when the or each chosen negative pressure fan (32) or suction opening (38) location is located on a wall (10, 14, 15) of the first heat zone (E1), no chosen negative pressure fan (32) or suction opening (38) location being located on a wall (11, 14, 15) of the second heat zone (E2).

9. The determining method (100) according to claim 6 or 8, wherein the lower air circulation opening (29A) has a height that is an affine function, at least piecewise, of the distribution function.

10. The determining method (100) according to any one of claims 3 to 9, wherein, when the choice (150) of the arrangement of the cooling system (30) comprises choosing the location of at least one exhaust fan (36) on an upper wall (12) of the electrical cabinet (1), the choice (150) of the arrangement of the cooling system (30) comprises an additional step for defining a positioning depth of said exhaust fan (36), said positioning depth being defined based on the distribution coefficient.

11. The determining method (100) according to any one of the preceding claims, wherein the data relative to the electrical cabinet (1) comprise at least one element among: the exterior dimensions of the electrical cabinet (1), the location depth of the separation plane (P), a designation of the electrical functional units (22) installed in the electrical cabinet (1) and of their characteristics, a usage rate of each of the electrical functional units (22), an installation altitude of the electrical cabinet (1), a nature of the material making up the outer walls (10, 11, 12, 13, 14, 15) of the electrical cabinet (1), a supply voltage of the electrical cabinet (1).

12. The determining method (100) according to any one of the preceding claims, wherein the distribution coefficient of the cooling need is also deduced based on a first setpoint temperature for the first heat zone (E1) and/or a second setpoint temperature for the second heat zone (E2).

13. A data processing system (74) for determining a cooling solution for an electrical cabinet (1) in which a plurality of electrical functional units (22) are housed, said electrical functional units (22) being arranged along a separation plane (P) of the electrical cabinet (1) delimiting:

   - a first heat zone (E1) formed by a first area of the electrical cabinet (1) located on a first side of the separation plane (P), and
   - a second heat zone (E2) formed by a second area of the electrical cabinet (1) located on a second side of the separation plane (P),

   **characterized in that** the data processing system (74) comprises:

   - a characterization member (54) to characterize, from data relative to the electrical cabinet (1), a cooling need of the electrical cabinet (1),
   - a selection member (58) to select, based on said cooling need, a cooling system (30) to cool the electrical cabinet (1),
   - a choosing member (60) to choose, based on the selected cooling system (30) and accessibility criteria of the electrical cabinet (1), an arrangement of the cooling system (30) on at least one outer wall (10, 11, 12, 13, 14, 15) of the electrical cabinet (1),
   - a deduction member (56) to deduce, based on the data relative to the electrical cabinet (1), a distribution coefficient of the cooling need between the first and second heat zones (E1, E2), and
   - an evaluation member (62) to evaluate, based on the selected cooling system (30) and the arrangement chosen for this cooling system (30), the need to form, in a lower half of the separation plane (P), a lower air circulation opening (29A) between the first heat zone (E1) and the second heat zone (E2) and to evaluate the position and dimensions of this lower air circulation opening (29A), when it is considered necessary, based on the distribution coefficient.

14. A computer program product comprising instructions that, when the program is implemented by a computer, lead the latter to implement a method (100) according to any one of claims 1 to 12.

15. A computer-readable physical recording medium comprising instructions that, when they are executed by a computer, lead the latter to implement a method (100) according to any one of claims 1 to 12.

**FIG.1**

**FIG.2**

## FIG.3

# FIG.4

P

29,29B

12

34

$H_{29B}$

26

22

26

-E2-

-E1-

34

14

11

10

26

22

26

$H_{29A}$

26

30,31

$H_{32}$

32

$D_{32,13}$

13

29,29A

## FIG.5

## FIG.6

## FIG.7

$$\underline{\text{FIG.8}}$$

## FIG.9

## FIG.10

**FIG.11**

## FIG.12

## FIG.13

## FIG.14

50

70

66

64

58

60

62

54

56

72

52

74

## FIG.15

100

```
    ┌─────────────┐
    │     110     │
    └──────┬──────┘
           │
           ▼
    ┌─────────────┐
    │     120     │
    └──────┬──────┘
           │
   ┌───────┴───────┐
   ▼               ▼
┌──────┐      ┌──────┐
│ 130  │      │ 140  │
└───┬──┘      └──┬───┘
    └──────┬─────┘
           ▼
    ┌─────────────┐
    │     150     │
    └──────┬──────┘
```

160

```
  ┌──────────────────────┐
  │   ┌─────────────┐     │
  │   │     162     │     │
  │   └──────┬──────┘     │
  │          ▼           │
  │   ┌─────────────┐    │
  │   │     164     │    │
  │   └──────┬──────┘    │
  └──────────┼───────────┘
             ▼
      ┌ ─ ─ ─ ─ ─ ─┐
        │   170   │
      └ ─ ─ ─ ─ ─ ─┘
             │
             ▼
    ┌─────────────┐
    │     180     │
    └──────┬──────┘
           │
           ▼
    ┌─────────────┐
    │     190     │
    └─────────────┘
```

## FIG.16

120

```
┌──────────────┐
│     121      │
└──────────────┘
        │
        ▼
┌──────────────┐
│     122      │
└──────────────┘
        │
        ▼
┌──────────────┐
│     123      │
└──────────────┘
        │
        ▼
┌──────────────┐
│     124      │
└──────────────┘
        │
        ▼
┌──────────────┐
│     125      │
└──────────────┘
        │
        ▼
┌──────────────┐
│     126      │
└──────────────┘
        │
        ▼
┌──────────────┐
│     127      │
└──────────────┘
```

FIG.17

130

131

132

133

134

FIG.18

140

141

142

143

144

145

146

145A

146A

145B

146B

145C

145D

FIG.19

150

152

154

158

156

## FIG.20

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013083421 A
- EP 2779334 A
- EP 2779335 A
- EP 3016221 A1